# EUROPÄISCHE PATENTSCHRIFT

(11) **EP 3 824 533 B1**
(45) Veröffentlichungstag und Bekanntmachung des Hinweises auf die Patenterteilung: **24.11.2021**
(21) Anmeldenummer: 19742731.3
(22) Anmeldetag: 19.07.2019
(51) Int. Cl.: H02K 11/215, H02K 41/03, H02K 16/02

(54) **VERFAHREN ZUM IDENTIFIZIEREN EINES SCHLITTENS EINES LINEAREN TRANSPORTSYSTEMS**
METHOD FOR IDENTIFICATION OF A SLIDING CARRIAGE OF A LINEAR TRANSPORT SYSTEM
PROCÉDÉ DE L'IDENTIFICATION D'UN CHARIOT COULISSANT D'UN SYSTÈME LINÉAIRE DE TRANSPORT

(30) Priorität: 02.08.2018 DE 102018118814
(43) Veröffentlichungstag der Anmeldung: 26.05.2021
(73) Patentinhaber: Beckhoff Automation GmbH, 33415 Verl (DE)
(72) Erfinder: SCHÖNKE, Tobias, 33728 Bielefeld (DE); GRABOWSKI, Marco, 33611 Bielefeld (DE); ACHTERBERG, Jan, 47249 Duisburg (DE); BETTENWORTH, Manuel, 33335 Gütersloh (DE); PRÜSSMEIER, Uwe, 32657 Lemgo (DE)
(74) Vertreter: Patentanwaltskanzlei WILHELM & BECK
(86) Internationale Anmeldenummer: PCT/EP2019/069518
(87) Internationale Veröffentlichungsnummer: WO 2020/025359

(56) Entgegenhaltungen:
- DE-A1-102011 004 348
- DE-A1-102012 204 917
- DE-A1-102014 117 200
- DE-A1-102015 102 236

## Beschreibung

Die Erfindung betrifft zwei Verfahren zum Identifizieren eines Schlittens eines linearen Transportsystems. Die Erfindung betrifft ferner eine Vorrichtung, die eingerichtet ist, alle Schritte des Verfahrens oder der Verfahren zum Identifizieren eines Schlittens eines linearen Transportsystems auszuführen. Die Erfindung betrifft des Weiteren ein lineares Transportsystem, ein Computerprogramm sowie ein maschinenlesbares Speichermedium.

Diese Patentanmeldung beansprucht die Priorität der deutschen Patentanmeldung DE 10 2018 118 814.5, deren Offenbarungsgehalt hiermit durch Rückbezug aufgenommen wird.

Die Patentschrift EP 3 044 133 B1 offenbart ein Verfahren zum Anpassen von Verfahrprofilen einer Vielzahl von einzelsteuerbaren Transportelementen zum Transport von Behältern in einer Behälterbehandlungsanlage entlang einer Transportbahn, wobei die Vielzahl der Transportelemente bewegbar an der Transportbahn angeordnet sind. Die Transportelemente sind so aufgelegt, dass sich zwischen zwei entlang der Transportbahn benachbarten Transportelementen aufgrund einer entsprechenden Magnetanordnung eine abstoßende Wechselwirkung ergibt, sodass Kollisionen vermieden oder zumindest abgeschwächt werden können.

Die Patentschrift EP 3 044 133 B1 offenbart weiter, dass eine Position eines Transportelements mittels einer Vielzahl von entlang der Transportbahn angeordneten Sensoren, beispielsweise Magnetfeldsensoren, bestimmt werden kann.

Beispielsweise kann durch regelmäßige und periodische Anordnung von Sensoren entlang zumindest eines Teilstücks der Transportbahn eine Position eines Transportelements auf diesem Teilstück der Transportbahn bestimmt werden. Dabei kann der Sensor als optischer Sensor, elektrischer Sensor, elektromagnetischer Sensor oder mechanischer Sensor ausgebildet sein, wobei zum Beispiel durch Messen einer Lichtreflexion an einem Reflektorelement des Transportelements, durch Induktion eines elektromagnetischen Signals aufgrund der Bewegung des Transportelements, durch Änderung des elektrischen Widerstandes des Sensors unter Ausnutzung eines magnetoresistiven Effekts, zum Beispiel aufgrund des magnetischen Flusses eines magnetischen Referenzelements, beispielsweise eines Permanentmagneten, oder des Reaktionselements des Transportelements, oder durch lokale Druckmessung aufgrund des Gewichts des Transportelements die Position des Transportelements im Bereich des Sensors bestimmt werden kann.

Ein elektromagnetischer Sensor kann dabei als Hallsensor ausgebildet sein, welcher auch dann ein Signal liefert, wenn das Magnetfeld, in dem er sich befindet ist, konstant ist.

Zur individuellen Unterscheidung kann ein Transportelement eine eindeutige Identifikationseinheit, zum Beispiel in Form eines Strichcodes, auslesbaren Speicherchips, eines aufgedruckten, aufgeklebten und/oder eingravierten alphanumerischen Codes, umfassen, wobei durch eine oder mehrere Identifikationserfassungsvorrichtungen entlang der Transportbahn eine Identifikation des Transportelements, welches die entsprechende Identifikationserfassungsvorrichtung passiert, ermöglicht wird.

Hinsichtlich dieser Identifikationsmöglichkeit besteht ein Nachteil darin, dass die Schlitten zuerst zu der Identifikationserfassungsvorrichtung fahren müssen, um identifiziert zu werden. Abhängig von ihrer momentanen Position müssen die Schlitten gegebenenfalls signifikant bewegt werden. Dies kann eine erhebliche Zeit in Anspruch nehmen.

Die Druckschrift DE 10 2011 004348 A1 offenbart ein Verfahren und eine Positionserfassungsvorrichtung zum Erfassen einer Position eines als Schlitten ausgebildeten, mittels eines Linearmotors beweglichen Elements einer Antriebsvorrichtung.

Die der Erfindung zugrundeliegende Aufgabe ist darin zu sehen, ein Konzept zum effizienten Identifizieren eines Schlittens eines linearen Transportsystems bereitzustellen.

Diese Aufgabe wird mittels des jeweiligen Gegenstands der unabhängigen Ansprüche 1 und 7 gelöst. Vorteilhafte Ausgestaltungen der Erfindung sind Gegenstand von jeweils abhängigen Ansprüchen. Ein lineare Transportsystem weist einen ersten Schlitten, einen zweiten Schlitten, eine Steuerung und einen Linearmotor zum Antreiben des ersten und des zweiten Schlittens auf, wobei der Linearmotor einen zumindest zwei Antriebsspulen aufweisenden Stator und einen ersten und einen zweiten Läufer umfasst, wobei der erste Läufer am ersten Schlitten und der zweite Läufer am zweiten Schlitten angeordnet ist, wobei der erste Schlitten einen ersten Magnetfelderzeuger aufweist, welcher eingerichtet ist, ein erstes Magnetfeld zu erzeugen, und der zweite Schlitten einen zweiten Magnetfelderzeuger aufweist, welcher eingerichtet ist, ein zweites Magnetfeld zu erzeugen, und wobei sich der erste Magnetfelderzeuger vom zweiten Magnetfelderzeuger in zumindest seinem magnetischen Vektorfeld unterscheidet. Ein Verfahren zum Identifizieren eines Schlittens des linearen Transportsystems umfasst die folgenden Schritte:
Anlegen eines ersten Steuersignals an den zumindest zwei Antriebsspulen aufweisenden Stator, welches eine ersten Messung auslöst, welche von dem magnetischen Vektorfeld der Magnetfelderzeuger der beiden Schlitten abhängt,
Empfangen wenigstens eines einem der beiden Schlitten zugeordneten ersten Messsignals, welches auf der ersten Messung basiert, Identifizieren des dem ersten Messsignal zugeordneten Schlittens als der erste Schlitten oder als der zweite Schlitten basierend auf dem wenigstens dem ersten Messsignal, wobei in der Steuerung zumindest ein Referenzwert hinterlegt ist, der einem der beiden Schlitten zugeordnet ist, wobei das Identifizieren des Schlittens auf einem Vergleich des ersten Messsignals mit dem zumindest einen Referenzwert basiert, und Ausgeben eines ersten oder eines zweiten Identifikationssignals, welches eine Identifikation des dem ersten Messsignal zugeordneten Schlittens als der erste oder der zweite Schlitten repräsentiert.

Das hier beschriebene Konzept basiert auf dem Gedanken, dass die unterschiedlichen Magnetfelderzeuger ein magnetisches Kennungsmittel für die Schlitten des linearen Transportsystems bilden, mittels welchen ein Schlitten effizient identifiziert werden kann. Identifizieren im Sinne der Beschreibung bedeutet insbesondere eine Unterscheidung zwischen zumindest zwei Schlitten. Ein Identifizieren im Sinne der Beschreibung ist also nicht eine Art Positionserkennnung, sondern ermöglicht in vorteilhafter Weise, dass ein Schlitten von dem anderen unterschieden werden kann.

Das heißt also, dass mittels des ersten Magnetfelds bzw. des ersten Magnetfelderzeugers ein erstes magnetisches Kennungsmittel des ersten Schlittens gebildet ist. Das heißt also, dass mittels des zweiten Magnetfelds bzw. des zweiten Magnetfelderzeugers ein zweites magnetisches Kennungsmittel des zweiten Schlittens gebildet ist.

Über diese beiden Kennungsmittel können dann die einzelnen Schlitten effizient identifiziert werden.

Dadurch, dass sich der erste Magnetfelderzeuger vom zweiten Magnetfelderzeuger in zumindest seinem magnetischen Vektorfeld unterscheidet, unterscheidet sich also auch das erste magnetische Kennungsmittel von dem zweiten magnetischen Kennungsmittel. Eine eindeutige Identifikation der jeweiligen Schlitten über die Kennungsmittel ist somit in vorteilhafter Weise ermöglicht.

Eine Messung, welche von einem Magnetfeld abhängt, wird also jeweils ein unterschiedliches Ergebnis abhängig davon bereitstellen, ob die Messung von dem ersten oder zweiten Magnetfeld abhängt. Über ein auf dieser Messung basierendes Messsignal kann dann in vorteilhafter Weise der diesem Messsignal zugeordnete Schlitten entweder als der erste oder als der zweite Schlitten identifiziert werden.

Dadurch, dass gemäß einem Aspekt für diese Identifikation der jeweilige Läufer der Schlitten verwendet wird, müssen nicht zusätzliche Identifikationseinheiten, beispielsweise in Form eines auslesbaren Speicherchips, am Schlitten selbst angebracht werden.

Dadurch können also Kosten eingespart werden. Weiter entfällt ein für dieses Anordnen eines solchen Speicherchips am Schlitten notwendiger Montageschritt.

Ein weiterer Vorteil besteht darin, dass die Schlitten nicht mehr signifikant bewegt werden müssen. Bei einer Identifikation unter Verwendung eines Hallsensors müssen alle Schlitten über die gesamte Strecke solange verfahren werden, bis der zu identifizierende Schlitten bei einem Hallsensor vorbeikommt.

Dadurch, dass gemäß einem Aspekt für diese Identifikation ein zusätzlich zu einem Läufer vorgesehener Magnetfelderzeuger verwendet wird, kann der Läufer für eine optimale magnetische Wechselwirkung mit den Antriebsspulen ausgebildet sein.

Wenn es einen zusätzlichen Magnetfelderzeuger z.B. zur Positionserfassung gibt, dann ist in der Regel ein Positionserfassungssystem im linearen Transportsystem vorgesehen, um die Position zu erfassen. Wenn nun einer diese Magnetfelderzeuger zur Positionserfassung verändert wird, kann dann neben der Position mit dem vorhandenen Positionserfassungssystem auch dieser Magnetfelderzeuger von den anderen unterschieden werden, so dass darüber auch eine eineindeutige Identifikation ermöglicht ist. Dadurch, dass das Positionserfassungssystem (beispielsweise umfassend Hallsensoren) über den gesamten Fahrweg der Schlitten die Position erfassen kann, funktioniert die Identifikation aller Schlitten unabhängig davon, wo sie sich aktuell befinden.

Des Weiteren hat ein weiterer Magnetfelderzeuger, der verschieden vom Läufer ist, den Vorteil, dass er frei von dem Läufer, also beispielsweise frei von Antriebsmagneten des Läufers, geändert und auf die Positionserfassung und Identifikation optimiert werden kann. Zudem sind die Signale auch nicht durch die Magnetfelder des Läufers, beispielsweise durch Magnetfelder der Antriebsmagnete, verändert, wodurch auch eine störärmere Erkennung zu besseren Ergebnissen hinsichtlich der Identifikation führen kann.

Somit wird also insbesondere der technische Vorteil bewirkt, dass ein Konzept zum effizienten Identifizieren eines Schlittens eines linearen Transportsystems bereitgestellt ist.

Nach einer Ausführungsform sind mehrere erste Schlitten vorgesehen. Erste Schlitten im Sinne der Beschreibung umfassen jeweils einen ersten Läufer.

Nach einer Ausführungsform sind mehrere zweite Schlitten vorgesehen. Zweite Schlitten im Sinne der Beschreibung umfassen jeweils einen zweiten Läufer.

Ausführungen, die im Zusammenhang mit dem ersten Schlitten gemacht sind, gelten analog für den zweiten Schlitten und umgekehrt.

Nach einer Ausführungsform ist vorgesehen, dass das jeweilige magnetischen Vektorfeld von einer Größe des jeweiligen Magnetfelderzeugers und/oder einer jeweiligen Polarität des jeweiligen Magnetfelderzeugers und/oder einer jeweiligen Ausrichtung des jeweiligen Magnetfelderzeugers und/oder einem jeweiligen Material des jeweiligen Magnetfelderzeugers und/oder von einer Anzahl und/oder einem Abstand der Pole des jeweiligen Magnetfelderzeugers abhängt. Das heißt beispielsweise, dass sich die Anzahl und/oder der Abstand der Pole des ersten Magnetfelderzeugers von denjenigen des zweiten Magnetfelderzeugers unterscheiden.

Dadurch wird zum Beispiel der technische Vorteil bewirkt, dass sich die erzeugten Magnetfelder effizient voneinander unterscheiden.

Ein Magnetfelderzeuger im Sinne der Beschreibung umfasst nach einer Ausführungsform einen oder mehrere Magneten, beispielsweise Permanentmagneten.

Ein magnetisches Vektorfeld im Sinne der Beschreibung weist zum Beispiel eines oder mehrere der folgenden Merkmale bzw. Eigenschaften auf: eine bestimmte Verteilung der Magnetfeldstärke und eine bestimmte Verteilung der Magnetfeldrichtung.

Ein magnetisches Vektorfeld im Sinne der Beschreibung kann zum Beispiel mittels einer oder mehrerer der folgenden Einflussfaktoren beeinflusst oder charakterisiert werden: Größe der Magneten, Form der Magneten, Position der Magneten, Material der Magneten, Magnetisierung der Magneten, Anzahl der Magneten.

Unterschiedliche Magnetfelderzeuger unterscheiden sich also zum Beispiel in zumindest einer der vorstehenden Merkmale bzw. Eigenschaften bzw. Einflussfaktoren.

Das heißt also insbesondere, dass sich die Magnetfelderzeuger zumindest in ihren Größen und/oder in ihrer Polarität und/oder in ihrer Ausrichtung und/oder ihrem jeweiligen Material und/oder in ihrer Polanzahl und/oder in ihrem Polabstand voneinander unterscheiden.

Es ist vorgesehen, dass in der Steuerung zumindest ein Referenzwert hinterlegt ist, der einem der beiden Schlitten zugeordnet ist, wobei das Identifizieren des dem ersten Messsignal zugeordneten Schlittens als der erste oder als der zweite Schlitten auf einem Vergleich des ersten Messsignals mit dem zumindest einen Referenzwert basiert.

Dadurch wird zum Beispiel der technische Vorteil bewirkt, dass der Schlitten effizient identifiziert werden kann.

Nach einer Ausführungsform ist vorgesehen, dass der zumindest eine Referenzwert in einer Steuerung hinterlegt ist, aus welcher der Referenzwert ausgelesen wird, wobei der zumindest eine Referenzwert zum Beispiel auf einer vorhergehenden Messung basiert oder zum Beispiel auf einer Erwartungshaltung basiert.

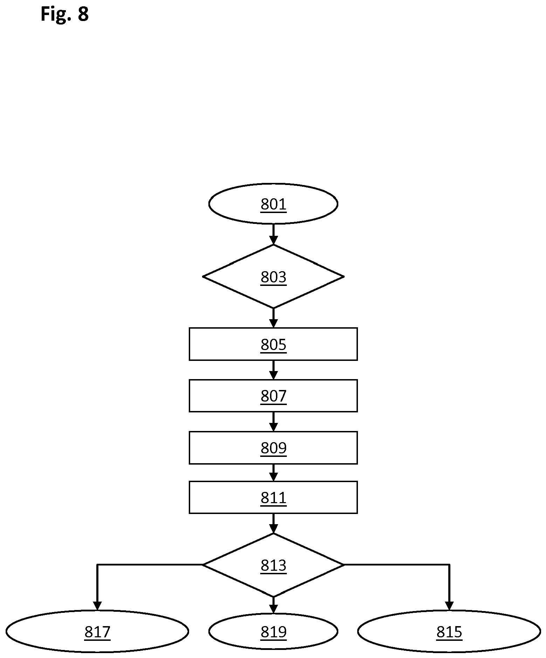

Dass der zumindest eine Referenzwert auf einer vorhergehenden Messung basiert, soll nachfolgend beispielhaft für die Identifikation über eine gesättigte Induktivität beschrieben werden. Das Prinzip der Identifikation basierend auf einer gesättigten Induktivität wird nachfolgend in den Ausführungen betreffend die Ausführungsform bezüglich der Sättigungsposition weiter beschrieben (siehe auch Fig. 8 und zugehörige Figurenbeschreibung) .

Vorher wurde eine oder mehrere bestimmte Positionen ausgemessen, welche Antriebsspule von einem der Antriebsmagnete des sich an der bestimmtem Position befindenden Schlittens ausreichend gesättigt wird, und vorher wurde beispielsweise weiterhin ausgemessen in welche Richtung (Verfahrrichtung) der Schlitten verfahren werden muss, um die Antriebsspule weiter zu sättigen bzw. aus der Sättigung herauszubringen.

Wenn sich dann zu einem späteren Zeitpunkt ein noch nicht identifizierter Schlitten an der bestimmtem Position befindet, kann dann ermittelt werden, ob die aktuelle Sättigung der Antriebsspule der vorhergehenden gemessenen Sättigung entspricht (zumindest innerhalb von akzeptablen Toleranzen) oder nicht bzw. ob die Verfahrrichtung des Schlittens hinsichtlich des in Sättigung Bringens bzw. Herausbringens der vorhergehenden gemessenen Verfahrrichtung entspricht oder nicht.

Weiter kann beispielsweise der erste und/oder der zweite Magnetfelderzeuger vorher vermessen werden (beispielsweise unter Verwendung eines oder mehrere Hallsensoren), wobei die dieser Messung entsprechenden Messsignale als Referenzwerte in der Steuerung gespeichert werden, so dass das aktuelle Messsignal gegen zwei vorher gemessene und in der Steuerung hinterlegte Referenzwerte verglichen werden kann.

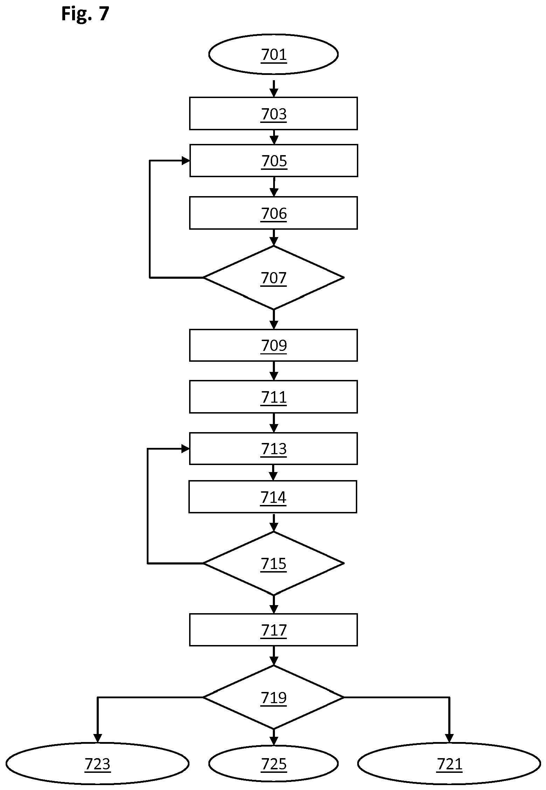

Bei einer Identifikation basierend auf einer Ausführungsform umfassend ein Ausgeben eines Stromzeigersteuersignals (siehe auch Figur 7 und zugehörige Figurenbeschreibung) und umfassend ein Erfassen einer aus dem Ausgeben des Stromzeigersteuersignals resultierender Bewegung eines Schlittens, kann beispielsweise vorher für den ersten und/oder zweiten Magnetfelderzeuger vermessen werden, in welche Richtung sich der entsprechende Schlitten bei welchem Stromzeigersteuersignal bewegt, so dass dieses Ergebnis als Referenzwert für eine spätere Messung verwendet werden kann.

Nach einer Ausführungsform ist vorgesehen, dass wenigstens ein dem anderen der beiden Schlitten zugeordnetes zweites Messsignal empfangen wird, welches auf einer zweiten Messung basiert, welche von dem Magnetfeld des Magnetfelderzeugers des anderen der beiden Schlitten abhängt, wobei das Identifizieren des dem ersten Messsignal zugeordneten Schlittens als der erste oder als der zweite Schlitten auf einem Vergleich des ersten Messsignales mit dem wenigstens einen empfangenen zweiten Messsignal basiert.

Dadurch wird zum Beispiel der technische Vorteil bewirkt, dass der Schlitten effizient identifiziert werden kann.

Gemäß einer weiteren Ausführungsform ist vorgesehen, ein zweites Steuersignal an den zumindest zwei Antriebsspulen aufweisenden Stator angelegt wird, welches eine zweiten Messung auslöst, welche von dem magnetischen Vektorfeld der Magnetfelderzeuger der beiden Schlitten abhängt, wobei ein zweites Messsignal empfangen wird, welches auf der zweiten Messung basiert.

Nach einer Ausführungsform umfasst das Verfahren die folgenden Schritte:
Empfangen eines ersten Positionssignals, welches eine erste Position von einem der beiden Schlitten repräsentiert,
nach dem Empfangen des ersten Positionssignals Ausgeben zumindest eines ersten Stromzeigersteuersignals zum Verteilen zumindest eines ersten Stromzeigers basierend auf einer ersten Kommutierungsvorschrift über die Antriebsspulen, um den sich an der ersten Position befindenden Schlitten anzutreiben,
wobei das wenigstens eine erste Messsignal ein zweites Positionssignal umfasst, wobei das zweite Positionssignal wenigstens eine Position des basierend auf dem ausgegebenen ersten Stromzeigersteuersignals angetriebenen Schlittens nach dem Ausgeben des ersten Stromzeigersteuersignals repräsentiert, wobei basierend auf dem ersten Positionssignal und auf dem zweiten Positionssignal ein kinematisches Verhalten des dem ersten Messsignal zugeordneten Schlittens nach dem Ausgeben des ersten Stromzeigersteuersignals ermittelt wird, wobei der dem ersten Messsignal zugeordnete Schlitten basierend auf dem ermittelten kinematischen Fahrverhalten als der erste oder als der zweite Schlitten identifiziert wird.

Dadurch wird zum Beispiel der technische Vorteil bewirkt, dass der Schlitten effizient identifiziert werden kann.

Diese Ausführungsform basiert also darauf, dass unterschiedliche Läufer unterschiedliche Fahrverhalten bei den Schlitten bewirken. Je nach erzeugtem Magnetfeld wird zum Beispiel der Schlitten schneller oder langsamer angetrieben. Beispielsweise fährt der Schlitten je nach erzeugtem Magnetfeld des entsprechenden Magnetfelderzeugers in eine bestimmte Richtung. Hierüber, also über die Richtung und/oder über die Geschwindigkeit kann dann beispielsweise der Schlitten identifiziert werden.

Eine Erwartungshaltung gibt also beispielsweise an, in welche Richtung der erste Schlitten bei dem ersten Stromzeigersteuersignal angetrieben wird und/oder gibt eine bestimmte Richtung an, in welche der zweite Schlitten beim ersten Stromzeigersteuersignal angetrieben wird.

Beispielsweise sind die beiden Fahrtrichtungen bezüglich des ersten und des zweiten Schlittens bei einem gleichen ersten Stromzeigersteuersignal entgegengesetzt zueinander.

Somit kann über eine Fahrtrichtung des Schlittens effizient der entsprechende Schlitten entweder als der erste oder als der zweite Schlitten identifiziert werden.

Beispielsweise ist vorgesehen, dass basierend auf dem ersten Positionssignal und auf dem zweiten Positionssignal eine erste Antriebsrichtung ermittelt wird, in welche sich der basierend auf dem ausgegebenen ersten Stromzeigersteuersignal angetriebene Schlitten nach dem Anzeigen des zumindest einen ersten Stromzeigersteuersignals bewegt hat, wobei der dem ersten Messsignal zugeordnete Schlitten basierend auf der ermittelten ersten Antriebsrichtung als der erste oder als der zweite Schlitten identifiziert wird.

Insbesondere wird dadurch der technische Vorteil bewirkt, dass diese Art des Identifizierens sehr robust ist. Dies deshalb, da die Polarität bzw. das Vorzeichen deutlich unterschiedlicher sind, als wenn nur eine Größe bzw. Amplitude ausgewertet würde. Weiter kann diese Art des Identifizierens einfach und schnell in ein bereits bestehendes lineares Transportsystem implementiert werden.

Gemäß einer Ausführungsform ist vorgesehen, dass, wenn sich einer der beiden Schlitten in einer Sättigungsposition relativ zu einer der Antriebsspulen befindet, in welcher das Magnetfeld des entsprechenden Magnetfelderzeugers einen Spulenkern der einen Antriebsspule in Sättigung bringt, ein ersten Sollstromsteuersignals zum Bestromen der einen Antriebsspule mit einem ersten Soll-Wechselstrom ausgegeben wird, wobei das wenigstens eine erste Messsignal ein erstes Spannungsmesssignal umfasst, welches eine abgeleitete Spulenspannung der mit dem ersten Soll-Wechselstrom bestromten Antriebsspule nach dem Ausgeben des ersten Sollstromsteuersignals repräsentiert.

Die abgeleitete Spulenspannung entspricht der Sollspannung, die sich am Ausgang eines Stromreglers zum Bestromen der Antriebsspulen ergibt und die der im Stromregler berechnetet Sollspannung entspricht.

Dadurch wird zum Beispiel der technische Vorteil bewirkt, dass der Schlitten effizient identifiziert werden kann.

Insbesondere wird dadurch der technische Vorteil bewirkt, dass eine entsprechende Magnetfeldmessung schnell und gleichzeitig auch bei mehreren Schlitten erfolgen kann. Beispielsweise wird der technische Vorteil bewirkt, dass sich der oder die Schlitten für das Identifizieren nicht bewegen müssen.

Nach einer weiteren Ausführungsform ist vorgesehen, dass ein zweites Sollstromsteuersignal zum Bestromen der einen Antriebsspule mit einem ersten Soll-Gleichstrom ausgegeben wird, wobei ein zweites Spannungsmesssignal empfangen wird, welches eine abgeleitete Spulenspannung der mit dem ersten Soll-Gleichstrom bestromten Antriebsspule nach dem Ausgeben des zweiten Sollstromsteuersignals repräsentiert, wobei basierend auf dem zweiten Spannungsmesssignal ein ohmscher Spannungsanteil der abgeleitete Spulenspannung des ersten Spannungsmesssignals berechnet wird, wobei der ohmscher Spannungsanteil von der abgeleiteten Spulenspannung des ersten Spannungsmesssignals abgezogen wird, um eine vom ohmscher Spannungsanteil bereinigte Spulenspannung zu ermitteln, wobei der dem ersten Messsignal zugeordnete Schlitten als der erste Schlitten oder als der zweite Schlitten basierend auf der ermittelten bereinigten Spulenspannung identifiziert wird.

Dadurch das der ohmsche Anteil herausgerechnet wurde, steigt in vorteilhafter Weise ein Signalunterschied zwischen den Messungen der beiden verschiedenen Magnetfelderzeugern im Vergleich zur gesamten Signalamplitude.

Nach einer anderen Ausführungsform ist vorgesehen, dass zumindest einer der Magnetfelderzeuger zumindest einen Permanentmagneten und/oder zumindest eine Spule umfasst wobei der zumindest eine Permanentmagnet und/oder die zumindest eine Spule jeweils als ein Antriebsmagnet bzw. Läufer des Linearmotors verwendet wird.

Dadurch wird zum Beispiel der technische Vorteil bewirkt, dass die Antriebsmagnete des Linearmotors, die an den Schlitten angeordnet sind, effizient zur Identifikation der Schlitten verwendet werden können.

Technische Funktionalitäten hinsichtlich der Vorrichtung und/oder des oder der linearen Transportsysteme ergeben sich analog aus entsprechenden technischen Funktionalitäten hinsichtlich des oder der Verfahren und umgekehrt.

Das heißt also insbesondere, dass sich Vorrichtungs- und/oder Systemmerkmale aus entsprechenden Verfahrensmerkmalen und umgekehrt ergeben.

Nach einer Ausführungsform umfasst das lineare Transportsystem eine Führungsschiene zum Führen der Schlitten. Zum Beispiel umfassen die Schlitten Laufrollen und zum Beispiel umfasst die Führungsschiene Laufflächen, auf welchen die Laufrollen abrollen können.

In einer Ausführungsform umfasst das lineare Transportsystem ein Positionserfassungssystem, welches eingerichtet ist, eine momentane Position der Schlitten zu ermitteln und Positionssignale entsprechend der ermittelten momentanen Position bereitzustellen.

Eine Antriebsspule im Sinne der Beschreibung umfasst zum Beispiel einen Spulenkern, der auch als ein Statorkern bezeichnet werden kann, wobei die Antriebsspule um den Spulenkern gewickelt ist.

Ausführungsformen der Erfindung sind in den Zeichnungen dargestellt und in der nachfolgenden Beschreibung näher erläutert. Es zeigen:
Fig. 1 ein lineares Transportsystem in einer Seitenansicht,
Fig. 2 ein Motormodul des in Fig. 1 gezeigten linearen Transportsystems in einer perspektivischen Ansicht,
Fig. 3 eine stark vereinfachte Draufsicht auf das in Fig. 1 gezeigte linearen Transportsystem,
Fig. 4 eine weitere stark vereinfachte Draufsicht auf einen ersten Schlitten des in Fig. 1 gezeigten linearen Transportsystems,
Fig. 5 eine stark vereinfachte Draufsicht auf einen zweiten Schlitten des in Fig. 1 gezeigten linearen Transportsystems,
Fig. 6 eine stark vereinfachte Seitenansicht auf den ersten Schlitten des linearen Transportsystems,
Fig. 7 ein Ablaufdiagramm eines ersten Verfahrens zum Identifizieren eines Schlittens eines linearen Transportsystems,
Fig. 8 ein Ablaufdiagramm eines zweiten Verfahrens zum Identifizieren eines Schlittens eines linearen Transportsystems,
Fig. 9 eine Vorrichtung, die eingerichtet ist, alle Schritte des Verfahrens zum Identifizieren eines Schlittens eines linearen Transportsystems auszuführen und
Fig. 10 ein maschinenlesbares Speichermedium.

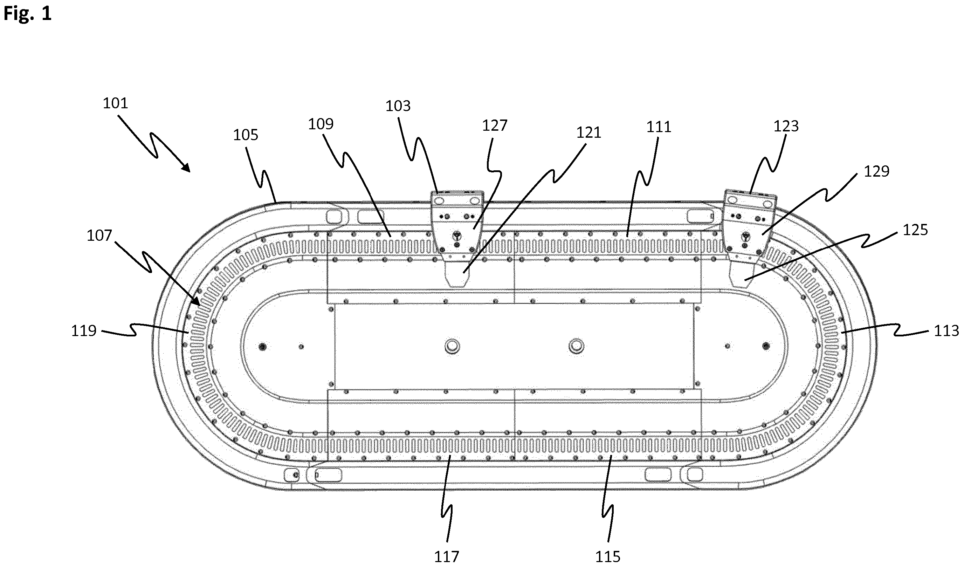

Fig. 1 zeigt ein lineares Transportsystem 101 in einer Seitenansicht.

Das lineare Transportsystem umfasst einen ersten Schlitten 103, welcher entlang einer Führungsschiene 105 geführt ist. Die Führungsschiene 105 kann Teil des linearen Transportsystems 101 sein.

Das lineare Transportsystem 101 umfasst einen Linearmotor 107 zum Antreiben des ersten Schlittens 103.

Der Linearmotor 107 umfasst ein erstes Motormodul 109, ein zweites Motormodul 111, ein drittes Motormodul 113, ein viertes Motormodul 115, ein fünftes Motormodul 117 und ein sechstes Motormodul 119. Die einzelnen Motormodule sind mechanisch und elektrisch miteinander verbunden und sind entlang der Führungsschiene 105 angeordnet.

Die einzelnen Motormodule umfassen mehrere in Fig. 1 nicht näher dargestellte Antriebsspulen, die einen Stator des Linearmotors 107 bilden.

An dem ersten Schlitten 103 ist eine erste Geberfahne 121 angeordnet. Die erste Geberfahne 121 wirkt mit einem nicht dargestellten Positionserfassungssystem des linearen Transportsystems 101 zusammen, um eine Position des ersten Schlittens 103 zu ermitteln.

Das lineare Transportsystem 101 umfasst einen zweiten Schlitten 123, der mittels der Führungsschiene 105 geführt ist. Der Linearmotor 107 treibt den zweiten Schlitten 123 an.

An dem zweiten Schlitten 123 ist eine zweite Geberfahne 125 angeordnet, die analog zur ersten Geberfahne 121 des ersten Schlittens 103 mit dem nicht dargestellten Positionserfassungssystem zusammenwirkt, um eine Position des zweiten Schlittens 123 zu ermitteln.

Der erste Schlitten 103 umfasst einen ersten Träger 127 und einen aufgrund der Seitenansicht nicht sichtbaren zweiten Träger, welcher dem ersten Träger 127 gegenüberliegt. Das Motormodul 109 befindet sich zwischen dem ersten Träger 127 und dem zweiten Träger. An dem ersten Träger 127 sind in Fig. 1 nicht dargestellte Antriebsmagnete angeordnet, die einen ersten Magnetfelderzeuger zum Erzeugen eines ersten Magnetfelds bilden.

Diese Antriebsmagnete sind an einer Innenseite des ersten Trägers 127 angeordnet und sind der in Fig. 1 gezeigten Vorderseite der Motormodule 109 bis 119 zugewandt.

An einer Innenseite des zweiten Trägers sind analog zum ersten Träger 127 mehrere hier ebenfalls nicht sichtbare Antriebsmagnete angeordnet. Diese Antriebsmagnete sind analog zu den Antriebsmagneten des ersten Trägers 127, welche zur Vorderseite der Motormodule 109 bis 119 zugewandt sind, der Rückseite der Motormodule 109 bis 119 gegenüberliegend. Die Antriebsspulen der Motormodule 109 bis 119 erzeugen abhängig von einer entsprechenden Bestromung entsprechende Magnetfelder, die mit den Magnetfeldern der Antriebsmagnete zusammenwirken, um den ersten Schlitten 103 anzutreiben und bilden somit einen ersten Läufer des Linearmotors 107.

Analog zum ersten Schlitten 103 weist auch der zweite Schlitten 123 einen dritten Träger 129 auf, an dessen Innenseite mehrere Antriebsmagnete angeordnet sind.

Analog zum ersten Schlitten 103 weist auch der zweite Schlitten 123 einen vierten Träger auf, der in Fig. 1 nicht sichtbar ist. An einer Innenseite des vierten Trägers sind ebenfalls mehrere Antriebsmagnete angeordnet. Die Antriebsmagnete des zweiten Schlittens 123 bilden einen zweiten Magnetfelderzeuger zum Erzeugen eines zweiten Magnetfelds und bilden somit einen zweiten Läufer des Linearmotors 107.

Der erste Magnetfelderzeuger des ersten Schlittens 103 unterscheidet sich von dem zweiten Magnetfelderzeuger des zweiten Schlittens 123 zumindest in seinem magnetischen Vektorfeld.

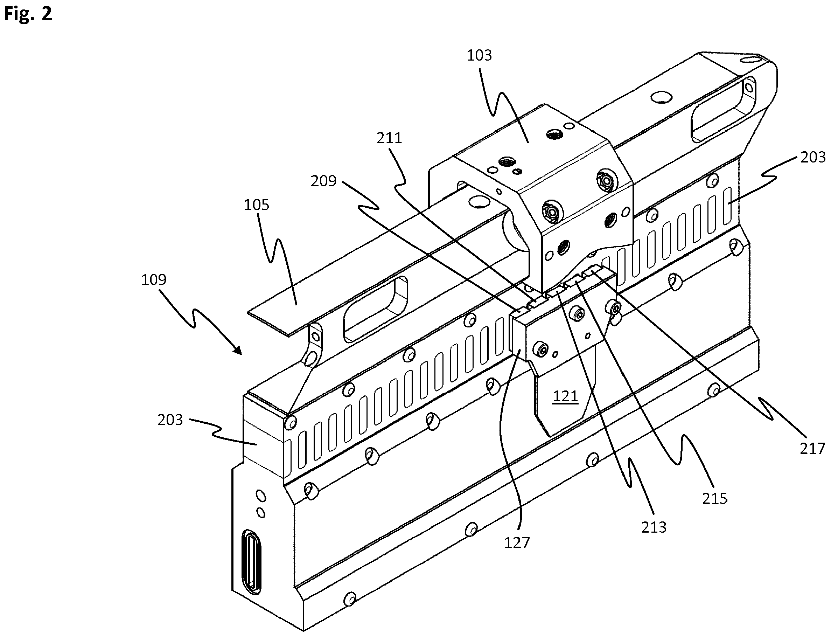

Fig. 2 zeigt das erste Motormodul 109 mit einem Teilausschnitt des ersten Schlittens 103 in einer perspektivischen Ansicht.

Der Übersicht halber ist für den ersten Schlitten 103 lediglich die erste Geberfahne 121 und der erste Träger 127 dargestellt, wobei der zweite Träger aufgrund der in Fig. 2 gewählten Perspektive nicht sichtbar ist.

Das erste Motormodul 109 umfasst mehrere nebeneinander angeordnete Spulenkerne 203, die allgemein auch als Statorkerne bezeichnet werden können.

Jeder zweite der Spulenkerne 203 ist mit einer in Fig. 2 nicht dargestellten Spule umwickelt. Das heißt also, dass jeder zweite Spulenkern 203 ungewickelt ist, also frei von einer Spule ist.

In einer nicht gezeigten Ausführungsform ist vorgesehen, dass jeder Spulenkern 203 jeweils mit einer Spule umwickelt ist.

Das zweite Motormodul 111, das vierte Motormodul 115 und das fünfte Motormodul 117 des linearen Transportsystems 101 sind analog zum ersten Motormodul 109 gemäß Fig. 2 aufgebaut.

Das dritte Motormodul 113 und das sechste Motormodul 119 sind im Wesentlichen analog zum ersten Motormodul 109 aufgebaut, wobei ein Unterschied in einer Geometrie besteht, der durch die Führungsschiene 105 vorgegeben ist.

An der den Spulenkernen 203 bzw. dem ersten Motormodul 109 zugewandten Innenseite des ersten Trägers 127 sind ein erster Magnet 209, ein zweiter Magnet 211, ein dritter Magnet 213, ein vierter Magnet 215 und ein fünfter Magnet 217 angeordnet.

An dem durch das erste Motormodul 109 verdeckten und somit nicht sichtbaren zweiten Träger sind analog zum ersten Träger 127 ebenfalls fünf Magnete derart angeordnet, dass diese jeweils den Spulenkernen 203 bzw. dem ersten Motormodul 109 zugewandt sind und insbesondere den ersten bis fünften Magneten 209 bis 217 des ersten Trägers 127 gegenüberliegen.

Somit bilden diese insgesamt zehn Magnete jeweils fünf Magnetpaare. Die jeweiligen Magnetpole der einander gegenüberliegenden Magnete sind entgegengesetzt zueinander angeordnet, zeigen also in entgegengesetzte Richtungen bzw. weisen entgegengesetzte Magnetpolaritäten bzw. magnetische Polungen auf.

Diese zehn Magnete sind Antriebsmagnete und bilden den Läufer des Linearmotors. Weiterhin sind sie Teil des ersten Magnetfelderzeugers.

Die Antriebsmagnete sind beispielsweise Permanentmagnete.

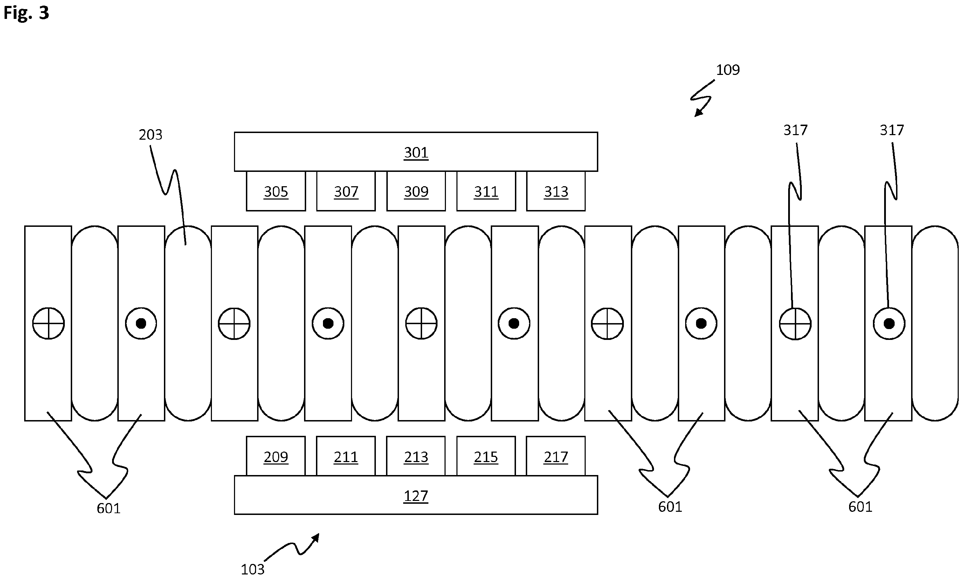

Fig. 3 zeigt eine stark vereinfachte geschnittene Draufsicht auf den ersten Schlitten 103 und das erste Motormodul 109 mit den Spulenkernen 203 und den Spulen 601.

Die Draufsicht zeigt den ersten Träger 127 und den gegenüberliegenden zweiten Träger 301 des ersten Schlittens 103. Der zweite Träger 301 weist eine den Spulenkernen 203 bzw. dem ersten Motormodul 109 zugewandte Innenseite auf, an welcher ein sechster Magnet 305, ein siebter Magnet 307, ein achter Magnet 309, ein neunter Magnet 311 und ein zehnter Magnet 313 angeordnet sind.

Diese sechsten bis zehnten Magnete 305 bis 313 des zweiten Trägers 301 bilden, wie vorstehend bereits beschrieben, mit den ersten bis fünften Magneten 209 bis 217 des ersten Trägers 127 fünf Magnetpaare.

Das Bezugszeichen 317 zeigt auf die Stromrichtung eines durch die Spulen fließenden Stroms.

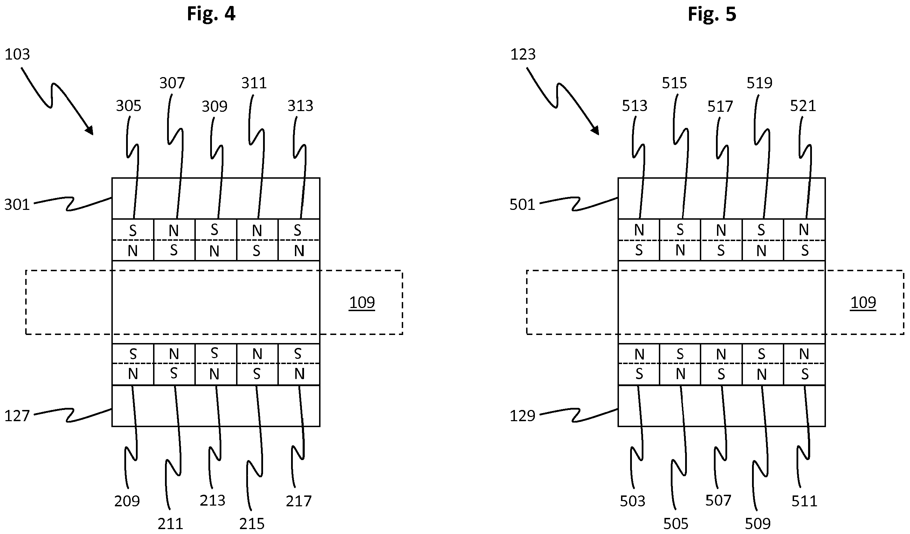

Fig. 4 zeigt eine noch weiter vereinfachte, schematische Draufsicht auf den ersten Schlitten 103. Und Fig. 5 zeigt eine noch weiter vereinfachte, schematische Draufsicht auf den zweiten Schlitte 123. Zum einfacheren Verständnis werden im Folgenden die Merkmale der Fig. 4 und 5 gemeinsam beschrieben.

Das erste Motormodul ist in Fig. 4 und Fig. 5 nur schematisch dargestellt.

Hierbei steht der Buchstabe "N" für den Nordpol des entsprechenden Antriebsmagneten des ersten Schlittens 103 bzw. des zweiten Schlittens 123. Weiter steht der Buchstabe "S" für den Südpol des entsprechenden Antriebsmagneten des ersten Schlittens 103 bzw. des zweiten Schlittens. Die Antriebsmagneten des ersten und zweiten Schlittens 103, 123 sind jeweils entweder mit ihrem Südpol S oder ihrem Nordpol N dem ersten Motormodul 109 zugewandt ausgerichtet.

Somit zeigt also der erste Magnet 209 mit seinem Südpol S in Richtung des ersten Motormoduls 109 und mit seinem Nordpol N in Richtung des ersten Trägers 127. Der zweite Magnet 211 zeigt mit seinem Nordpol N in Richtung des ersten Motormoduls 109 und mit seinem Südpol S in Richtung des ersten Trägers 127. Der dritte Magnet 213 zeigt mit seinem Südpol S in Richtung des ersten Motormoduls 109 und mit seinem Nordpol N in Richtung des ersten Trägers 127. Der vierte Magnet 215 zeigt mit seinem Nordpol N in Richtung des ersten Motormoduls 109 und mit seinem Südpol S in Richtung des ersten Trägers 127. Der fünfte Magnet 217 zeigt mit seinem Südpol S in Richtung des ersten Motormoduls 109 und mit seinem Nordpol N in Richtung des ersten Trägers 127.

Der sechste Magnet 305, der mit dem ersten Magneten 209 ein Magnetfeldpaar bildet, zeigt mit seinem Nordpol N in Richtung des ersten Motormoduls 109 und mit seinem Südpol S in Richtung des zweiten Trägers 301. Der siebte Magnet 307, der mit dem zweiten Magneten 211 ein zweites Magnetpaar bildet, zeigt mit seinem Südpol S in Richtung des ersten Motormoduls 109 und mit seinem Nordpol N in Richtung des zweiten Trägers 301. Der achte Magnet 309, der mit dem dritten Magneten 213 ein drittes Magnetpaar bildet, zeigt mit seinem Nordpol N in Richtung des ersten Motormoduls 109 und mit seinem Südpol S in Richtung des zweiten Trägers 301. Der neunte Magnet 311, der mit dem vierten Magneten 215 ein viertes Magnetpaar bildet, zeigt mit seinem Südpol S in Richtung des ersten Motormoduls 109 und mit seinem Nordpol N in Richtung des zweiten Trägers 301. Der zehnte Magnet 313, der mit dem fünften Magneten 217 ein fünftes Magnetpaar bildet, zeigt mit seinem Nordpol N in Richtung des ersten Motormoduls 109 und mit seinem Südpol S in Richtung des zweiten Trägers 301.

Der zweite Schlitten 123 umfasst den dritten Träger 129 sowie den vierten Träger 501.

An einer dem Motormodul 109 zugewandten Innenseite des dritten Trägers 129 sind ein elfter Magnet 503, ein zwölfter Magnet 505, ein dreizehnter Magnet 507, ein vierzehnter Magnet 509 und ein fünfzehnter Magnet 511 angeordnet.

An der dem Motormodul 109 zugewandten Innenseite des vierten Trägers 501 sind ein sechzehnter Magnet 513, ein siebzehnter Magnet 515, ein achtzehnter Magnet 517, ein neunzehnter Magnet 519 und ein zwanzigster Magnet 521 angeordnet.

Analog zum ersten Schlitten 103 bilden der elfte Magnet 503 und der sechzehnte Magnet 513 ein erstes Magnetpaar und bilden der zwölfte Magnet 505 und der siebzehnte Magnet 515 ein zweites Magnetpaar und bilden der dreizehnte Magnet 507 und der achtzehnte Magnet 517 ein drittes Magnetpaar und bilden der vierzehnte Magnet 509 und der neunzehnte Magnet 519 ein viertes Magnetpaar und bilden der fünfzehnte Magnet 511 und der zwanzigste Magnet 521 ein fünftes Magnetpaar.

Diese zehn Magnete des zweiten Schlittens 123 bilden Antriebsmagnete bzw. den Läufer des Linearmotors.

Der elfte Magnet 503 zeigt insofern mit seinem Nordpol N in Richtung des ersten Motormoduls 109 und mit seinem Südpol S in Richtung des dritten Trägers 129. Der zwölfte Magnet 505 zeigt mit seinem Südpol S in Richtung des ersten Motormoduls 109 und mit seinem Nordpol N in Richtung des dritten Trägers 129. Der dreizehnte Magnet 507 zeigt mit seinem Nordpol N in Richtung des ersten Motormoduls 109 und mit seinem Südpol S in Richtung des dritten Trägers 129. Der vierzehnte Magnet 509 zeigt mit seinem Südpol S in Richtung des ersten Motormoduls 109 und mit seinem Nordpol N in Richtung des dritten Trägers 129. Der fünfzehnte Magnet 511 zeigt mit seinem Nordpol N in Richtung des ersten Motormoduls 109 und mit seinem Südpol S in Richtung des dritten Trägers 129. Der sechzehnte Magnet 513 zeigt mit seinem Südpol S in Richtung des ersten Motormoduls 109 und mit seinem Nordpol N in Richtung des vierten Trägers 501. Der siebzehnte Magnet 515 zeigt mit seinem Nordpol N in Richtung des ersten Motormoduls 109 und mit seinem Südpol S in Richtung des vierten Trägers 501. Der achtzehnte Magnet 517 zeigt mit seinem Südpol S in Richtung des ersten Motormoduls 109 und mit seinem Nordpol N in Richtung des vierten Trägers 501. Der neunzehnte Magnet 519 zeigt mit seinem Nordpol N in Richtung des ersten Motormoduls 109 und mit seinem Südpol S in Richtung des vierten Trägers 501. Der zwanzigste Magnet 521 zeigt mit seinem Südpol S in Richtung des ersten Motormoduls 109 und mit seinem Nordpol N in Richtung des vierten Trägers 501.Die Magnete der beiden Schlitten 103 und 123 sind jeweils identisch ausgebildet, unterscheiden sich jedoch hinsichtlich ihrer Nord-Süd-Pol-Ausrichtung und somit in ihrem magnetischen Vektorfeld.

Die entsprechenden Polausrichtungen der einzelnen Magnete beim zweiten Schlitten 123 sind verglichen mit den entsprechenden Polausrichtungen der Magnete des ersten Schlittens 103 in Bezug auf die Ausrichtung zum ersten Motormodul 109 hin genau entgegengesetzt.

Anders ausgedrückt, sind die einzelnen Magnete des zweiten Schlittens 123 verglichen mit den entsprechenden Magneten des ersten Schlittens 103 in Bezug auf ihre Ausrichtung in Richtung des ersten Motormoduls 109 um 180° gedreht. Oder anders ausgedrückt, ist der zweite Schlitten 123 mit seinem zweiten Magnetfelderzeuger identisch zum ersten Schlitten 103 mit seinem ersten Magnetfelderzeuger, wurde aber in Bezug auf die Längsausrichtung des ersten Motormoduls 109 um 180° gedreht auf die Führungsschiene 105 aufgesetzt, so dass sich das entsprechende magnetischen Vektorfeld des ersten Schlittens 103 vom magnetischen Vektorfeld des zweiten Schlittens 123 im Betrieb des linearen Transportsystems 101 unterscheiden.

Aufgrund dieser unterschiedlichen Anordnungen der Antriebsmagnete der beiden Schlitten 103, 123 verhalten sich die beiden Schlitten bei gleicher Bestromung der Antriebsspulen unterschiedlich. Bei gleichem Stromzeiger, der über eine Kommutierungsvorschrift auf die Antriebsspulen verteilt wird, bewegt sich einer der beiden Schlitten in Richtung des Stromzeigers, wohingegen sich der andere der beiden Schlitten weg von diesem Stromzeiger bewegt.

Dadurch kann also beispielsweise einmal ein Stromzeiger mit einem positiven Strombetrag und einmal mit einem negativen Strombetrag geschaltet werden. Die unterschiedliche Anordnung bzw. Ausrichtung der einzelnen Pole der Magnete der beiden Schlitten bewirkt in beiden Fällen eine unterschiedliche Reaktion. Hierüber kann dann eine Aussage darüber getroffen werden, ob es sich bei dem angetriebenen Schlitten um den ersten Schlitten 103 oder um den zweiten Schlitten 123 handelt.

Der Vorteil, wenn einmal mit einem positiven Strombetrag und einmal mit einem negativen Strombetrag ein Stromzeiger über eine Kommutierungsvorschrift auf die Antriebsspulen verteilt wird, liegt insbesondere darin, dass dann auch eine Identifikation der Schlitten ermöglicht ist, wenn sich der Schlitten z.B. unter dem Einfluss einer in eine Richtung wirkende Kraft befindet. Dies kann z.B. die Schwerkraft in der Kurve bei einem stehenden Schlitten sein. Die konstante Kraft kann dann vorteilhafterweise nicht die Messung in beide Richtungen fehlerhaft beeinflussen.

Der Stromzeiger kann gemäß einer Ausführungsform so aufgeschaltet werden, dass er bezogen auf eine momentane Position der Schlitten erst einmal keine Kraft auf den entsprechenden Schlitten (unabhängig von der entsprechenden Polausrichtung der Antriebsmagnete) erzeugt. Der Stromzeiger befindet sich also im Sinne seiner Kraftwirkung in einer Ruhelage. Dann ist gemäß einer Ausführungsform vorgesehen, dass der Stromzeiger aus der Ruhelage herausbewegt wird, bis eine Bewegung des entsprechenden Schlittens erfasst bzw. erkannt wird. Das Erfassen der Bewegung des entsprechenden Schlittens kann zum Beispiel unter Verwendung des Positionserfassungssystems durchgeführt werden, welches einer momentanen Position des Schlittens entsprechende Positionssignale bereitstellt. Basierend auf diesen Positionssignalen kann beispielsweise ermittelt werden, ob sich der Schlitten bewegt oder nicht bzw. in welche Richtung sich der Schlitten bewegt bzw. bewegt hat.

Genauso kann gemäß einer Ausführungsform auch vorgesehen sein, dass ein Betrag des Stromzeigers erhöht wird, bis eine Mindestbewegung erfasst bzw. erkannt wird, was beispielsweise analog mittels des Positionserfassungssystems erfasst werden kann. Dadurch lässt sich zum Beispiel in vorteilhafter Weise erreichen, dass ein Schlitten mit wenig Masse und wenig Reibung bei einer Identifikation genauso wenig Bewegung hat wie ein Schlitten mit viel Last und Reibung.

Üblicherweise reicht eine Bewegung von ungefähr 100 µm, um eine Fahrtrichtung des entsprechenden Schlittens zu erkennen und hierüber den Schlitten zu identifizieren.

In einer Ausführungsform ist vorgesehen, dass der entsprechende Schlitten nach seiner Identifikation zurück an seine ursprüngliche Position bewegt wird, von welcher das Verfahren zur Identifikation startete.

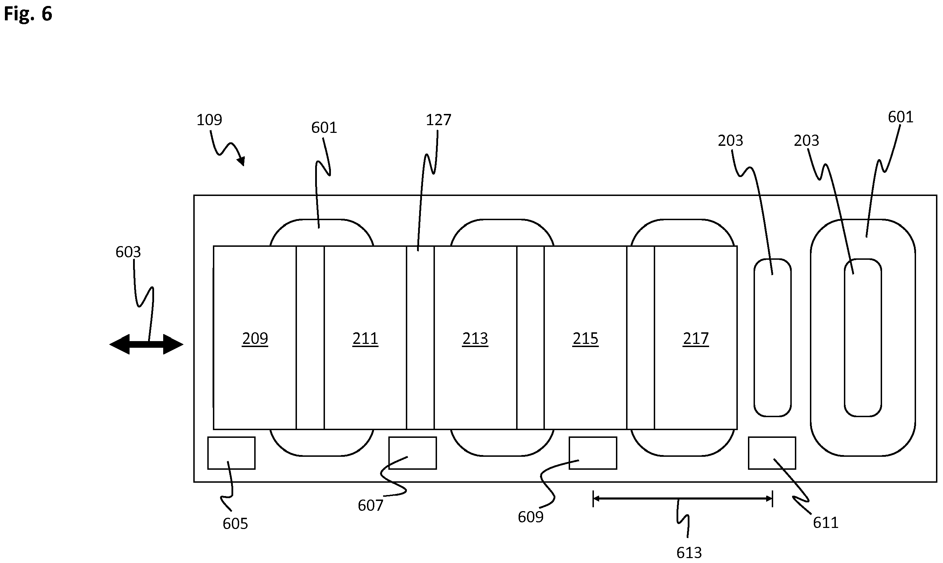

Fig. 6 zeigt eine sehr stark vereinfachte Seitenansicht des ersten Motormoduls 109 mit dem ersten Träger 127.

Gut zu erkennen ist ein ungewickelter Stator oder Spulenkern 203. Weiter ist der in Fig. 6 gewählten Darstellung jeweils eine Spule 601 um jeden zweiten Spulenkern 203 zu erkennen.

Unterhalb von den ungewickelten Spulenkernen 203 ist jeweils ein Hallsensor angeordnet.

Gemäß der in Fig. 6 gezeigten Darstellung sind ein erster Hallsensor 605, ein zweiter Hallsensor 607, ein dritter Hallsensor 609 und ein vierter Hallsensor 611 gezeigt.

In einer nicht gezeigten Ausführungsform sind mehr oder weniger als diese vier Hallsensoren vorgesehen.

Es ist nicht notwendig, dass sich unter jedem ungewickelten Spulenkern 203 ein eigener Hallsensor befindet. Es reicht beispielsweise aus, dass das lineare Transportsystem als Ganzes vier Hallsensoren umfasst, die jeweils unter einem ungewickelten Spulenkern 203 angeordnet sind. An dieser Stelle wird angemerkt, dass bereits mindestens 1 Hallsensor ausreicht.

Ein Abstand zwischen zwei Hallsensoren beträgt beispielsweise eine Länge eines Trägers in Fahrtrichtung. Bezogen auf die Figur 6 reichen beispielsweise der erste Hallsensor 605 und der vierte Hallsensor 611 für die Identifikation aus.

Bei einer Fahrt des Schlittens über diese Hallsensoren 605 bis 611 erfassen diese das Magnetfeld des entsprechenden Magnetfelderzeugers, worüber dann eine Identifikation des entsprechenden Schlittens ermöglicht ist.

Dies ist bei der Verwendung von Hallsensoren auch dann möglich, wenn sich der entsprechende Schlitten nicht bewegt, also stillsteht.

Gemäß einer Ausführungsform ist vorgesehen, dass mittels der Hallsensoren das Magnetfeld der entsprechenden Magnetfelderzeuger vermessen wird und als Referenz abgespeichert wird.

In einem Betrieb des linearen Transportsystems kann dann ein aktuell gemessenes Magnetfeld mit den vorgespeicherten Referenzwerten verglichen werden, sodass basierend auf diesem Vergleich der dem entsprechenden Magnetfeld zugeordnete Schlitten entweder als der erste Schlitten 103 oder als der zweite Schlitten 123 identifiziert werden kann.

Das Bezugszeichen 603 zeigt auf einen Doppelpfeil, der eine mögliche Bewegungsrichtung des Schlittens angibt.

Ein Abstand 613, symbolisch durch einen Doppelpfeil dargestellt, zwischen zwei Hallsensoren beträgt beispielsweise zwischen 10 mm und 20 mm, insbesondere 16,6 mm. Dieser Abstand 613 ist insbesondere durch einen Abstand der Spulenkerne 203 vorgegeben.

Die Hallsensoren werden bevorzugterweise deshalb unter den ungewickelten Spulenkernen 203 angeordnet, da hier mehr Bauraum zur Verfügung steht verglichen mit den gewickelten Spulenkernen. Das heißt also, dass die Hallsensoren näher an die Antriebsmagnete der Schlitten angeordnet werden können verglichen mit den gewickelten Spulen 601.

In einer nicht gezeigten Ausführungsform des linearen Transportsystems 101 ist vorgesehen, dass der erste und/oder der zweite Magnetfelderzeuger verschieden von dem ersten bzw. zweiten Läufer des ersten bzw. zweiten Schlittens 103, 123 ist. Das heißt beispielsweise, dass der erste Schlitten 103 zusätzlich zum ersten Läufer einen ersten Magnetfelderzeuger aufweist, welcher nicht für ein Antreiben des ersten Schlittens 103 verwendet wird. Der erste Magnetfelderzeuger ist also beispielsweise zusätzlich zu den Antriebsmagneten des ersten Schlittens 103 vorgesehen.

Das heißt beispielsweise, dass der zweite Schlitten 123 zusätzlich zum zweiten Läufer einen zweiten Magnetfelderzeuger aufweist, welcher nicht für ein Antreiben des zweiten Schlittens 123 verwendet wird. Der zweite Magnetfelderzeuger ist also beispielsweise zusätzlich zu den Antriebsmagneten des zweiten Schlittens 123 vorgesehen.

Ein Schlitten, welcher zusätzlich zu seinen Antriebsmagneten einen zusätzlichen Magnetfelderzeuger aufweist, wird gemäß einer Ausführungsform mittels einer Magnetfeldmessung des mittels des zusätzlichen Magnetfelderzeugers erzeugten Magnetfelds unter Verwendung von einem oder mehreren Hallsensoren identifiziert.

Fig. 7 zeigt ein Ablaufdiagramm eines ersten Verfahrens zum Identifizieren eines Schlittens des linearen Transportsystems 101.

Das Verfahren startet bei einem ersten Schritt 701.

Gemäß einem zweiten Schritt 703 wird ein erstes Positionssignal empfangen, welches eine erste Position von einem der beiden Schlitten 103, 123 repräsentiert. Das erste und auch die nachfolgenden Positionssignale können beispielsweise mittels des Positionserfassungssystems bereitgestellt werden, welches eine momentane Position der Schlitten ermittelt. Die erste Position kann auch als eine Startposition bezeichnet werden.

Nach dem Empfangen des ersten Positionssignals wird gemäß einem dritten Schritt 705 ein erstes Stromzeigersteuersignal zum Verteilen zumindest eines ersten Stromzeigers basierend auf einer ersten Kommutierungsvorschrift über die Antriebsspulen des linearen Transportsystems 101 aufgeschaltet, um den sich an der ersten Position befindenden Schlitten anzutreiben.

Basierend auf dem ausgegebenen ersten Stromzeigersteuersignal werden die Antriebsspulen entsprechend bestromt, um den Schlitten anzutreiben.

Der vierten Schritt 706 umfasst weiter ein Empfangen eines zweiten Positionssignals, wobei das zweite Positionssignal eine Position des angetriebenen Schlittens nach dem Ausgeben des ersten Stromzeigersteuersignals repräsentiert.

In einem fünften Schritt 707 wird basierend auf dem ersten Positionssignal und dem zweiten Positionssignal überprüft, ob sich der Schlitten um eine vorbestimmte Mindestdistanz von der ersten Position wegbewegt hat.

Sofern das Prüfen gemäß dem fünften Schritt 707 ergeben hat, dass sich der Schlitten noch nicht mindestens um die Mindestdistanz von der ersten Position wegbewegt hat, wird das Verfahren im dritten Schritt 705 fortgesetzt. Hier ist dann beispielsweise ein Erhöhen einer momentanen Amplitude des ersten Stromzeigersteuersignals vorgesehen.

Sofern das Überprüfen gemäß dem fünften Schritt 707 ergeben hat, dass sich der Schlitten um mindestens die vorbestimmte Mindestdistanz von der ersten Position wegbewegt hat, ist gemäß einem sechsten Schritt 709 vorgesehen, dass eine momentane Position des Schlittens, die der Position des Schlittens am Ende vom fünften Schritt 707 entspricht, gespeichert wird.

In einer nicht dargestellten Ausführungsform kann zusätzlich oder anstelle des Speicherns der Position vorgesehen sein, dass ein der Bewegung des Schlittens entsprechender Bewegungswert, der der Differenz aus Startposition zur momentanen Position am Ende vom fünften Schritt 707 entspricht, gespeichert wird.

Gemäß einem siebten Schritt 711 ist vorgesehen, dass so lange gewartet wird, bis der Schlitten angehalten hat. Dies kann basierend auf ein Empfangen von weiteren zweiten Positionssignalen ermittelt werden. Das der Anhalteposition des Schlittens entsprechende zweite Positionssignal wird für ein späteres Identifizieren des Schlittens abgespeichert.

Gemäß einem achten Schritt 713 wird weiter ein zweites Stromzeigersteuersignal zum Verteilen zumindest eines zweiten Stromzeigers basierend auf der ersten Kommutierungsvorschrift über die Antriebsspulen ausgegeben, um den sich an der Anhalteposition befindenden Schlitten anzutreiben. Hierbei ist der zweite Stromzeiger entgegengesetzt zum ersten Stromzeiger. Das heißt, dass der zweite Stromzeiger in die entgegengesetzte Richtung zeigt bezogen auf den ersten Stromzeiger. Sofern also beispielsweise basierend auf dem ersten Stromzeiger ein positiver Sollstrom ausgegeben wird, ist gemäß dem achten Schritt 713 vorgesehen, dass basierend auf dem zweiten Stromzeiger ein negativer Sollstrom ausgegeben wird (oder umgekehrt), der sich beispielsweise bis auf das Vorzeichen nicht vom positiven Sollstrom unterscheidet.

Das heißt also, dass nun der Schlitten in die entgegengesetzte Fahrtrichtung angetrieben wird.

In einem neunten Schritt 714 wird ferner ein drittes Positionssignal empfangen, welches eine Position des Schlittens nach Ausgeben des zweiten Stromzeigersteuersignals repräsentiert.

In einem zehnten Schritt 715 wird analog zum fünften Schritt 707 basierend auf dem dritten Positionssignal geprüft, ob sich der Schlitten um die vorgegebene Mindestdistanz von der Anhalteposition in die entgegengesetzte Fahrtrichtung bewegt hat.

Sofern der zehnte Schritt 715 ergeben hat, dass sich der Schlitten noch nicht um die vorbestimmte Mindestdistanz in die entgegengesetzte Fahrtrichtung bewegt hat, wird das Verfahren im Schritt achten 713 fortgesetzt. Hier ist dann beispielsweise ein Erhöhen einer momentanen Amplitude des zweiten Stromzeigersteuersignals vorgesehen.

Sofern das Prüfen im zehnten Schritt 715 ergeben hat, dass sich der Schlitten um mindestens die vorbestimmte Mindestdistanz von der Anhalteposition wegbewegt hat, ist in einem elften Schritt 717 vorgesehen, dass eine momentane Position des Schlittens, die der Position des Schlittens am Enden vom zehnten Schritt 715 entspricht, gespeichert wird.

In einer nicht dargestellten Ausführungsform kann zusätzlich oder anstelle des Speicherns der Position vorgesehen sein, dass ein der Bewegung des Schlittens entsprechender Bewegungswert, der der Differenz aus der Position am Ende vom fünften Schritt 707 zur momentanen Position am Ende vom zehnten Schritt 715 entspricht, gespeichert wird.

Das heißt also, dass der Schlitten so lange in die erste Fahrtrichtung basierend auf dem ersten Stromzeigersteuersignal bewegt wird, bis dieser eine vorbestimmte Mindestdistanz gefahren ist. Anschließend wird der Schlitten in die entgegengesetzte, die zweite Fahrtrichtung, Richtung angetrieben, bis er wiederum eine vorbestimmte Mindestdistanz gefahren ist.

In einem zwölften Schritt 719 werden dann Referenzwerte bzw. Erwartungswerte aus der Steuerung ausgelesen, welche definieren, welcher Schlitten sich bei positivem und negativem Sollstrom in welche Richtung bewegt.

Basierend auf diesen ausgelesenen Referenzwerten kann dann ein Vergleich mit den vorstehend beschriebenen empfangenen zweiten und dritten Positionssignalen bei der entsprechenden Bestromung durchgeführt werden, um zu ermitteln, ob es sich bei dem Schlitten, welcher von der ersten Position gestartet wurde, um den ersten oder um den zweiten Schlitten handelt.

Somit kann also der Schlitten als der erste oder als der zweite Schlitten identifiziert werden.

Entsprechend ist dann abhängig von einem Ergebnis des Prüfens gemäß dem zwölften Schritt 719 ein Ausgeben eines erstes Identifikationssignals 721 vorgesehen, welches eine Identifikation des Schlittens als den ersten Schlitten repräsentiert, oder es wird ein zweites Identifikationssignal 723 ausgegeben, welches eine Identifikation des Schlittens als der zweite Schlitten repräsentiert.

Sofern aber beispielsweise der Vergleich gemäß dem zwölften Schritt 719 ergeben hat, dass die Bewegungen bei den unterschiedlichen Bestromungen nicht unterschiedliche Vorzeichen hatten, wird ein Fehlersignal 725 ausgegeben.

In einer nicht dargestellten Ausführungsform des zu Fig. 7 beschriebenen Verfahrens kann auf den achten Schritt 713 bis elften Schritt 717 verzichtet werden und das im vierten Schritt 706 ermittelte zweite Positionssignal wird direkt im zwölften Schritt 719 mit einem ausgelesenen Referenzwert verglichen. Entsprechend ist dann abhängig von einem Ergebnis des Prüfens gemäß dem zwölften Schritt 719 ein Ausgeben eines ersten Identifikationssignals 721 vorgesehen, welches eine Identifikation des Schlittens als den ersten Schlitten repräsentiert, oder es wird ein zweites Identifikationssignal 723 ausgegeben, welches eine Identifikation des Schlittens als der zweite Schlitten repräsentiert.

In einer weiteren nicht dargestellten Ausführungsform des zu Fig. 7 beschriebenen Verfahrens kann im zwölften Schritt 719 auf das Auslesen von Referenzwerte bzw. Erwartungswerte aus einer Steuerung, welche definieren, welcher Schlitten sich bei positivem und negativem Sollstrom in welche Richtung bewegt, verzichtet werden. In dem zwölften Schritt 719 wird dann ausschließlich ein Vergleich des im vierten Schritt 706 ermittelten zweiten Positionssignals und dem im neunten Schritt 714 ermittelten dritten Positionssignals durchgeführt. Eines der zweiten bzw. dritten Positionssignale wird dann einem ersten Schlitten zugeordnet und entsprechend ein erstes Identifikationssignal 721 ausgegeben, welches eine Identifikation des Schlittens als den ersten Schlitten repräsentiert. Das andere der zweiten bzw. dritten Positionssignale wird dann einem zweiten Schlitten zugeordnet und entsprechend ein zweites Identifikationssignal 723 ausgegeben, welches eine Identifikation des Schlittens als den zweiten Schlitten repräsentiert. Bei einem derartigen vereinfachten Verfahren erfolgt eine beliebige Unterscheidung der Schlitten als erster Schlitten oder zweiter Schlitten. Dies kann für einige praktische Anwendungsfälle jedoch völlig ausreichend sein. Wenn beispielweise eine Mehrzahl an Schlitten in einem Transportsystem betrieben werden und nur ein Schlitten einen zu den anderen Schlitten unterschiedlichen Magnetfelderzeuger aufweist, dann wird ausschließlich das zweite Positionssignal dieses Schlittens nach dem Durchlaufen der genannten Verfahrensschritte ein anderes Richtungsvorzeichen in Bezug auf die durchgeführte Bewegung aufweisen, da alle anderen Schlitten in eine andere Richtung bewegt wurden. Somit kann diesem einem Schlitten das erste Identifikationssignal 721 und allen anderen Schlitten das zweite Identifikationssignal 723 zugeordnet und entsprechend ausgegeben werden.

Bei Verfahren, die auf das in Figur 7 gezeigte Verfahren basieren, ist also notwendigerweise ein Positionserfassungssystem für eine Positionserfassung der Schlitten vorgesehen, um die entsprechenden Positionen der Schlitten zu erfassen.

Auch eine beliebige Kombination der zuvor beschriebenen Ausführungsformen ist denkbar und für den Fachmann ohne weiteres umsetzbar.

Fig. 8 zeigt ein Ablaufdiagramm eines zweiten Verfahrens zum Identifizieren eines Schlittens des linearen Transportsystems 101.

Das Verfahren startet beim ersten Schritt 801.

Gemäß einem zweiten Schritt 803 ist ein Empfangen eines Positionssignals vorgesehen, welches eine momentane Position eines der beiden Schlitten repräsentiert.

Abhängig von der momentanen Position des Schlittens wird eine der Antriebsspulen ausgewählt, welche für eine Sättigungsmessung verwendet wird. Beispielsweise ist vorgesehen, dass diejenige der Antriebsspulen verwendet bzw. ausgewählt wird, welche am meisten von einem Antriebsmagneten gesättigt wird.

In einem dritten Schritt 805 wird ein erstes Sollstromsteuersignal zum Bestromen der ausgewählten Antriebsspule mit einem ersten Soll-Wechselstrom ausgegeben, um die ausgewählte Antriebsspule mit dem ersten Soll-Wechselstrom zu bestromen.

Der dritten Schritt 805 umfasst weiter ein Empfangen eines ersten Spannungsmesssignals, welches eine abgeleitete Spulenspannung der mit dem ersten Soll-Wechselstrom bestromten Antriebsspule nach dem Ausgeben des ersten Soll-Stromsteuersignals repräsentiert.

In einem vierten Schritt 807 ist dann vorgesehen, dass ein zweites Sollstromsteuersignal zum Bestromen der ausgewählten Antriebsspule mit einem ersten Soll-Gleichstrom ausgegeben wird, wobei der vierte Schritt 807 weiter ein Empfangen eines zweiten Spannungsmesssignals umfasst, welches eine abgeleitete Spulenspannung der mit dem ersten Soll-Gleichstrom bestromten Antriebsspule nach dem Ausgeben des zweiten Sollstromsteuersignals repräsentiert.

Der vierte Schritt 807 kann auch vor dem dritten Schritt 805 durchgeführt werden.

Basierend auf der Spannungsmessung bei an der ausgewählten Antriebsspule angelegtem Gleichstrom wird dann gemäß einem fünften Schritt 809 der induktive Spannungsanteil des Spannungswerts bei angelegtem Soll-Wechselstrom berechnet.

Entsprechend ist gemäß dem fünften Schritt 809 vorgesehen, die bei Bestromung mit dem Soll-Wechselstrom gemessene Spulenspannung um diesen ohmeschen Spannungsanteil zu bereinigen, also abzuziehen.

In einem sechsten Schritt 811 ist weiter vorgesehen, dass basierend auf der bereinigten Spulenspannung ein positiver und ein negativer Scheitelwert der Spulenspannung der Antriebsspule berechnet wird.

Abhängig von dem entsprechenden Magnetfeld des entsprechenden Magnetfelderzeugers des entsprechenden Schlittens wird die bestromte Antriebsspule entweder mehr in Sättigung gehen oder aus der Sättigung herausgehen, was einen Einfluss auf die Induktivität der Antriebsspule hat, was wiederum über die Spulenspannung gemessen werden kann.

Auch hier wurde im Vorfeld im Rahmen einer Referenzmessung ermittelt, welcher der Schlitten welches Spannungsmesssignal bei der Sättigungsmessung erzeugt hat, wobei diese Messwerte als Referenzwerte abgespeichert und in einer Steuerung hinterlegt wurden.

In einem siebten Schritt 813 ist dann vorgesehen, dass diese vorgespeicherten Referenzwerte abgerufen oder ausgelesen werden und mit den gemessenen Werten verglichen werden, um den Schlitten als den ersten Schlitten oder als den zweiten Schlitten zu identifizieren. Entsprechend wird ein erstes Identifikationssignal 815 ausgegeben, welches eine Identifikation des Schlittens als den ersten Schlitten repräsentiert. Oder es wird ein zweites Identifikationssignal 817 ausgegeben, welches eine Identifikation des Schlittens als den zweiten Schlitten repräsentiert.

Sofern der Vergleich gemäß dem siebten Schritt 813 keine eindeutige Antwort bzw. kein eindeutiges Ergebnis ergeben hat, wird ein Fehlersignal 819 ausgegeben.

In einer weiteren nicht gezeigten Ausführungsform wird hierüber auch die Position der Schlitten ermitteln bzw. bestimmt, so dass in vorteilhafter Weise zum Beispiel ein separates Positionserfassungssystem zur Positionserfassung der Schlitten für die Identifikation nicht verwendet werden muss oder separate Hallsensoren nicht vorgesehen sein müssen. Somit lässt sich z.B. ein sensorloses (hinsichtlich der Identifikation) Verfahren realisieren.

Für eine effiziente Identifikation bei einem solch sensorlosen Verfahren ist beispielsweise vorgesehen, dass die Abstände der Antriebsspulen untereinander und die Abstände der Antriebsmagnete untereinander derart festgelegt sind, dass es keine Positionen für einen der beiden Schlitten gibt, an welchen der Magnetfelderzeuger des einen Schlittens eine Antriebsspule bei Verfahren des einen Schlittens in eine bestimmte Richtung in Sättigung bringt, wobei der Magnetfelderzeuger des anderen der beiden Schlitten genau diese Antriebsspule an einer anderen Position des anderen Schlittens bei Verfahren des anderen Schlittens in genau die gleiche bestimmte Richtung auch in Sättigung bringt.

In einer nicht dargestellten Ausführungsform des zu Fig. 8 beschriebenen Verfahrens kann auf den vierten Schritt 807 und den neunten Schritt 809 verzichtet werden und das im dritten Schritt 805 ermittelte erste Spannungsmesssignal wird direkt im siebten Schritt 813 mit einem ausgelesenen Referenzwert verglichen. Entsprechend ist dann abhängig von einem Ergebnis des Prüfens gemäß dem siebten Schritt 813 ein Ausgeben eines ersten Identifikationssignals 815 vorgesehen, welches eine Identifikation des Schlittens als den ersten Schlitten repräsentiert, oder es wird ein zweites Identifikationssignal 817 ausgegeben, welches eine Identifikation des Schlittens als der zweite Schlitten repräsentiert.

In einer weiteren nicht dargestellten Ausführungsform des zu Fig. 8 beschriebenen Verfahrens kann im siebten Schritt 813 auf das Auslesen von Referenzwerte bzw. Erwartungswerte aus einer Steuerung verzichtet werden. In dem siebten Schritt 813 wird dann ausschließlich ein Vergleich des im dritten Schritt 805 ermittelten ersten Spannungsmesssignals und dem im vierten Schritt 807 ermittelten zweiten Spannungsmesssignals durchgeführt. Eines der ersten bzw. zweiten Spannungsmesssignale wird dann einem ersten Schlitten zugeordnet und entsprechend ein erstes Identifikationssignal 815 ausgegeben, welches eine Identifikation des Schlittens als den ersten Schlitten repräsentiert. Das andere der ersten bzw. zweiten Spannungsmesssignale wird dann einem zweiten Schlitten zugeordnet und entsprechend ein zweites Identifikationssignal 817 ausgegeben, welches eine Identifikation des Schlittens als den zweiten Schlitten repräsentiert. Bei einem derartigen vereinfachten Verfahren erfolgt eine beliebige Unterscheidung der Schlitten als erster Schlitten oder zweiter Schlitten. Dies kann für einige praktische Anwendungsfälle jedoch völlig ausreichend sein. Wenn beispielweise eine Mehrzahl an Schlitten in einem Transportsystem betrieben werden und nur ein Schlitten einen zu den anderen Schlitten unterschiedlichen Magnetfelderzeuger aufweist, dann wird ausschließlich das erste Spannungsmesssignal dieses Schlittens nach dem Durchlaufen der genannten Verfahrensschritte unterschiedlich zu den Spannungsmesssignalen der anderen Schlitten sein. Somit kann diesem einem Schlitten das erste Identifikationssignal 815 und allen anderen Schlitten das zweite Identifikationssignal 817 zugeordnet und entsprechend ausgegeben werden.

In einer weiteren nicht dargestellten Ausführungsform des erfindungsgemäßen Verfahrens kann auf das Ermitteln des ersten Positionssignals gemäß dem zweiten Schritt 803 verzichtet werden. In dem dritten Schritt 805 wird dann ein erstes Sollstromsteuersignal zum Bestromen aller im Transportsystem 101 befindlichen Antriebsspulen mit einem ersten Soll-Wechselstrom ausgegeben, um alle Antriebsspule mit dem ersten Soll-Wechselstrom zu bestromen. Alle weiteren Verfahrensschritte folgen dann wie zuvor beschrieben.

Auch eine beliebige Kombination der zuvor beschriebenen Ausführungsformen ist denkbar und für den Fachmann ohne weiteres umsetzbar.

Bei Verfahren, die auf das in Figur 8 gezeigte Verfahren basieren, kann beispielsweise auf die Verwendung eines Positionserfassungssystems für die Identifikation der Schlitten verzichtet werden, insofern hier nicht zwingend die entsprechenden Positionen der Schlitten separat erfasst werden müssen. So ist es zum Beispiel möglich, alle Antriebsspulen gemäß dem Verfahren zu bestromen und anhand des Sättigungsmusters bzw. des Sättigungsverhaltens der Antriebsspulen die Schlitten zu identifizieren und hierüber auch ihre Position zu ermitteln.

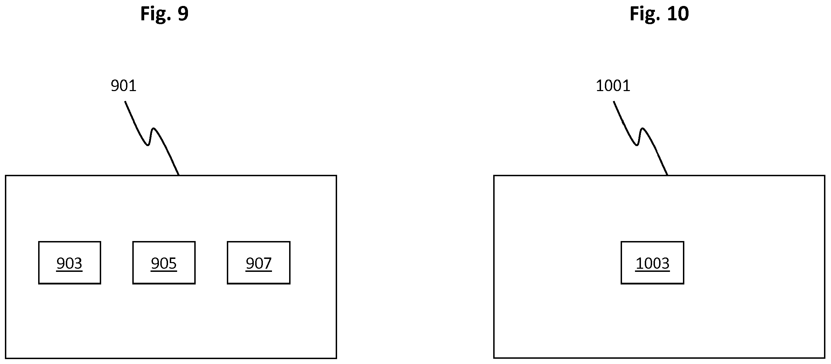

Fig. 9 zeigt eine Vorrichtung 901, die eingerichtet ist, alle Schritte des Verfahrens zum Identifizieren eines Schlittens in einem linearen Transportsystem gemäß dem ersten und/oder gemäß dem zweiten Aspekt auszuführen.

Die Vorrichtung 901 umfasst einen Eingang 903, der eingerichtet ist, wenigstens ein einem der beiden Schlitten zugeordnetes erstes Messsignal zu empfangen, welches auf einer ersten Messung basiert, welche von dem Magnetfeld des Magnetfelderzeugers des einen der beiden Schlitten abhängt.

Die Vorrichtung 901 umfasst weiter einen Prozessor 905, der eingerichtet ist, den dem ersten Messsignal zugeordneten Schlitten als den ersten Schlitten oder als den zweiten Schlitten basierend auf dem wenigstens einen ersten Messsignal zu identifizieren.

Die Vorrichtung 901 umfasst einen Ausgang 907, der eingerichtet ist, ein erstes oder zweites Identifikationssignal auszugeben, welches eine Identifikation des dem ersten Messsignal zugeordneten Schlittens als der erste oder der zweite Schlitten repräsentiert.

In einer nicht gezeigten Ausführungsform sind anstelle des einen Prozessors 905 mehrere Prozessoren vorgesehen.

Der Eingang 903 umfasst gemäß einer weiteren nicht gezeigten Ausführungsform eine erste Kommunikationsschnittstelle, die eingerichtet ist, Signale, beispielsweise Messsignale, über ein Kommunikationsnetzwerk zu empfangen.

Das Kommunikationsnetzwerk umfasst gemäß einer Ausführungsform ein EtherCAT-Kommunikationsnetzwerk.

Der Ausgang 907 umfasst gemäß einer weiteren nicht gezeigten Ausführungsform eine zweite Kommunikationsschnittstelle, die eingerichtet ist, Signale, beispielsweise Identifikationssignale und/oder Steuersignale, über das Kommunikationsnetzwerk auszugeben.

In einer anderen nicht gezeigten Ausführungsform umfasst die Vorrichtung 901 eine Kommunikationsschnittstelle, die die Funktionalitäten der ersten Kommunikationsschnittstelle und der zweiten Kommunikationsschnittstelle in sich vereint.

Fig. 10 zeigt ein maschinenlesbares Speichermedium 1001.

Auf dem maschinenlesbaren Speichermedium 1001 ist ein Computerprogramm 1003 gespeichert, welches Befehle umfasst, die bei Ausführung des Computerprogramms 1003 durch einen Computer, beispielsweise durch die Vorrichtung 901 der Fig. 9, diesen veranlassen, ein Verfahren zum Identifizieren eines Schlittens eines linearen Transportsystems auszuführen.

Zusammenfassend basiert das hier beschriebene Konzept unter anderem darauf, dass an Schlitten eines linearen Transportsystems Magnetfelderzeuger angeordnet sind, die teilweise unterschiedliche Magnetfelder erzeugen, sodass sich die entsprechenden Magnetfelderzeuger zumindest in ihrem magnetischen Vektorfeld unterscheiden.

Über diese unterschiedlichen magnetischen Vektorfelder ist also ein jeweiliges magnetisches Kennungsmittel gebildet, über welche die einzelnen Schlitten des linearen Transportsystems effizient identifiziert werden können.

In einer Ausführungsform ist vorgesehen, dass der Magnetfelderzeuger Teil des Läufers ist. Beispielsweise werden die Antriebsmagnete der Schlitten für ihre Identifikation verwendet.

In einer Ausführungsform ist vorgesehen, dass es sich bei diesen Magneten nicht um die Antriebsmagnete handelt, sondern um zusätzliche Magnete, die am Schlitten zusätzlich zu den Antriebsmagneten, also zusätzlich zum Läufer, angeordnet sind. Diese zusätzlichen Magnete können beispielsweise auch andere Aufgaben erfüllen. Beispielsweise können diese zusätzlichen Magnete auch für eine Positionserfassung verwendet werden.

In einer Ausführungsform ist vorgesehen, dass das entsprechend erzeugte Magnetfeld mittels eines oder mittels mehrerer Hallsensoren gemessen wird. Dieses gemessene Magnetfeld wird beispielsweise mit einem Referenzmagnetfeld verglichen, um den entsprechenden Schlitten als den ersten oder als den zweiten Schlitten zu identifizieren.

Sofern die Magnetfelderzeuger Teil des Läufers sind, ist gemäß einer Ausführungsform vorgesehen, dass der Schlitten basierend auf seinem Fahrverhalten identifiziert wird. Denn abhängig vom erzeugten Magnetfeld werden sich die Schlitten bei einem gleichen Stromzeigersteuersignal unterschiedlich verhalten. Beispielsweise bewegt sich der eine Schlitten in eine erste Fahrtrichtung und bewegt sich der zweite Schlitten bezogen auf diese Fahrtrichtung entgegengesetzte Fahrtrichtung bei Anlegen des gleichen Stromzeigers.

Sofern die Magnetfelderzeuger Teil des Läufers sind, ist gemäß einer Ausführungsform vorgesehen, die Schlitten über eine Messung einer richtungsabhängigen Induktivität einer Antriebsspule zu identifizieren (die vorstehende Sättigungsmessung) .

Das Prinzip der Sättigungsmessung basiert darauf, dass, wenn eine Antriebsspule gesättigt ist, genauer gesagt der umwickelte Spulenkern der Antriebsspule gesättigt ist, ihre Induktivität sinkt. Das heißt also, dass dann für eine bestimmte Stromänderung weniger Spannung benötigt wird.

Sofern also ein Schlitten mit seinen Antriebsmagneten oberhalb oder zumindest teilweise oberhalb einer Antriebsspule steht, bringen diese Antriebsmagnete die entsprechende Antriebsspule, genauer gesagt den umwickelten Spulenkern (Statorkern), auch in Sättigung.

Es wird dann ein Soll-Wechselstrom, beispielsweise ein sinusförmiger Soll-Wechselstrom, vorgegeben und an die Antriebsspule angelegt, wobei die diesem Soll-Wechselstrom entsprechende Spulenspannung abgeleitet wird. Wenn der angelegte Soll-Wechselstrom die Antriebsspule in eine Richtung weiter sättigt, wird die Spulenspannung in diese Richtung geringer verglichen mit dem umgekehrten Fall, wenn mit dem umgekehrten Soll-Wechselstrom die Spule aus der Sättigung herausgebracht wird und ihre Induktivität steigt.

Je nach erzeugtem Magnetfeld des Magnetfelderzeugers wird also die Antriebsspule weiter in Sättigung gebracht oder wird aus der Sättigung herausgebracht, was über ein Messen der an der Antriebsspule anliegenden Spulenspannung dann ermittelt werden kann.

Die Formulierung, dass eine Antriebsspule in Sättigung gebracht wird, bedeutet bzw. steht für, dass der mittels der Antriebsspule umwickelte Spulenkern (Statorkern) in Sättigung gebracht wird.

Auch hier ist beispielsweise vorgesehen, dass eine Referenzsättigungsmessung für den ersten und für den zweiten Schlitten durchgeführt wird, um die entsprechenden Spulenspannungen als Referenzmesswerte zu speichern. Diese gespeicherten Messwerte können dann später im Betrieb des linearen Transportsystems ausgelesen und mit den dann aktuellen Messwerten verglichen werden, um den entsprechenden Schlitten als den ersten oder als den zweiten Schlitten zu identifizieren.

Bei der Messung während des Betriebs und/oder während der Referenzsättigungsmessung ist beispielsweise in einer Ausführungsform vorgesehen, dass ein Soll-Gleichstrom, beispielsweise ein Soll-Gleichstrom von 3 A, an die Antriebsspule angelegt wird. Die dann an der Antriebsspule anliegende Spulenspannung ist unabhängig von der Induktivität der Spule, sodass hierüber ein ohmscher Spannungsanteil ermittelt werden kann, welcher vom Spannungsmesssignal bei Bestromung mit dem Soll-Wechselstrom abgezogen werden kann.

Dadurch können die den beiden Schlitten zugeordneten Messkurven der Spulenspannungen noch deutlicher unterschieden werden, was eine effiziente Identifikation ermöglicht.

## Patentansprüche

1. Verfahren zum Identifizieren eines Schlittens (103,123) eines linearen Transportsystems (101), wobei das lineare Transportsystem (101) einen ersten Schlitten (103), einen zweiten Schlitten (123), eine Steuerung eine Führungsschiene (105) und einen Linearmotor (107) zum Antreiben des ersten und des zweiten Schlittens (103, 123) entlang der Führungsschiene (105) umfasst, wobei der Linearmotor (107) einen Stator mit zumindest zwei Antriebsspulen aufweisenden Motormodulen (109, 111, 113, 115, 117, 119) und einen ersten und einen zweiten Läufer umfasst, wobei die miteinander mechanisch und elektrisch verbundenen Motormodule (109, 111, 113, 115, 117, 119) entlang der Führungsschiene (105) angeordnet sind, wobei der erste Läufer am ersten Schlitten (103) und der zweite Läufer am zweiten Schlitten (123) angeordnet ist, wobei der erste Schlitten (103) einen ersten Magnetfelderzeuger aufweist, welcher mehrere, entlang der Führungsschiene (105) ausgerichtete Magneten aufweist und eingerichtet ist, ein erstes Magnetfeld zu erzeugen, und der zweite Schlitten (123) einen zweiten Magnetfelderzeuger aufweist, welcher mehrere, entlang der Führungsschiene (105) ausgerichtete Magneten aufweist und eingerichtet ist, ein zweites Magnetfeld zu erzeugen, wobei die Magneten des ersten Magnetfelderzeugers und die Magneten des zweiten Magnetfelderzeugers jeweils abwechselnd mit dem Südpol (S) und dem Nordpol (N) den Motormodulen 109, 111, 113, 115, 117, 119) zugewandt ausgerichtet sind, wobei sich der erste Magnetfelderzeuger vom zweiten Magnetfelderzeuger in zumindest seinem magnetischen Vektorfeld unterscheidet, in dem die Polausrichtung der Magnete des ersten Magnetfelderzeugers des ersten Schlittens (103) gegenüber der Polausrichtung der Magnete des zweiten Magnetfelderzeugers des zweiten Schlittens (123) in Bezug auf die Längsausrichtung zu den Motormodulen (109, 111, 113, 115, 117, 119) hin um 180° gedreht und somit genau entgegengesetzt ist, so dass bei Betrachtung der ersten und zweiten Magnetfelderzeuger bei auf die Führungsschiene (105) aufgesetzten ersten und zweiten Schlitten (103,123) der erste Magnet des ersten Magnetfelderzeugers mit dem Südpol (S) und der erste Magnet des zweiten Magnetfelderzeugers mit dem Nordpol (N) den Motormodulen (109, 111, 113, 115, 117, 119) zugewandt ausgerichtet sind, umfassend die folgenden Schritte:
Anlegen (705, 803) eines ersten Steuersignals an den zumindest zwei Antriebsspulen aufweisenden Stator, welches eine erste Messung auslöst, welche von dem magnetischen Vektorfeld der Magnetfelderzeuger der beiden Schlitten (103, 123) abhängt,
Empfangen (706, 805) wenigstens eines einem der beiden Schlitten (103, 123) zugeordneten ersten Messsignals, welches auf der ersten Messung basiert,
Identifizieren (719, 813) des dem ersten Messsignal zugeordneten Schlittens (103, 123) als der erste Schlitten (103) oder als der zweite Schlitten (123) basierend wenigstens auf dem ersten Messsignal, wobei in der Steuerung zumindest ein Referenzwert hinterlegt ist, der einem der beiden Schlitten (103, 123) zugeordnet ist, wobei das Identifizieren (719, 813) des Schlittens (103,123) auf einem Vergleich des ersten Messsignals mit dem zumindest einen Referenzwert basiert,
Ausgeben eines ersten oder eines zweiten Identifikationssignals (721, 723, 815, 817), welches eine Identifikation des dem ersten Messsignal zugeordneten Schlittens (103, 123) als der erste (103) oder der zweite Schlitten (123) repräsentiert.

2. Verfahren nach Anspruch 1, wobei ein zweites Steuersignal an den zumindest zwei Antriebsspulen aufweisenden Stator angelegt(713,807) wird, welches eine zweiten Messung auslöst, welche von dem magnetischen Vektorfeld der Magnetfelderzeuger der beiden Schlitten (103, 123) abhängt, wobei ein zweites Messsignal empfangen (807, 714) wird, welches auf der zweiten Messung basiert.

3. Verfahren nach Anspruch 1 oder 2, umfassend die folgenden Schritte:
Empfangen (703) eines ersten Positionssignals, welches eine erste Position von einem der beiden Schlitten (103, 123) repräsentiert,
nach dem Empfangen des ersten Positionssignals Ausgeben (705) zumindest eines ersten Stromzeigersteuersignals zum Verteilen zumindest eines ersten Stromzeigers basierend auf einer ersten Kommutierungsvorschrift über die Antriebsspulen als ersten Steuersignal an den zumindest zwei Antriebsspulen aufweisenden Stator, um den sich an der ersten Position befindenden Schlitten (103, 123) anzutreiben, und
Empfangen (706) als das erste Messsignal ein zweites Positionssignal, wobei das zweite Positionssignal wenigstens eine Position des basierend auf dem ausgegebenen ersten Stromzeigersteuersignals angetriebenen Schlittens (103, 123) nach dem Ausgeben (705) des ersten Stromzeigersteuersignals repräsentiert, wobei basierend auf dem ersten Positionssignal und auf dem zweiten Positionssignal ein erstes kinematisches Verhalten des Schlittens (103, 123) nach dem Ausgeben des ersten Stromzeigersteuersignals ermittelt wird, wobei der Schlitten (103, 123) basierend auf dem ermittelten kinematischen Fahrverhalten als der erste (103) oder als der zweite Schlitten (123) identifiziert wird.

4. Verfahren nach Anspruch 3, wobei ein erstes Stromzeigersteuersignal zum Verteilen zumindest eines zweiten Stromzeigers basierend auf der ersten Kommutierungsvorschrift über die Antriebsspulen als zweites Steuersignal an den zumindest zwei Antriebsspulen aufweisenden Stator, um den sich an der zweiten Position befindenden Schlitten (103, 123) anzutreiben, Empfangen (714) als das zweite Messsignal ein drittes Positionssignal umfasst, wobei das dritte Positionssignal wenigstens eine Position des basierend auf dem ausgegebenen zweiten Stromzeigersteuersignals angetriebenen Schlittens (103,123) nach dem Ausgeben (713) des zweiten Stromzeigersteuersignals repräsentiert, wobei basierend auf dem zweiten Positionssignal und auf dem dritten Positionssignal ein zweites kinematisches Verhalten des Schlittens (103, 123) nach dem Ausgeben des zweiten Stromzeigersteuersignals ermittelt wird, wobei der Schlitten (103, 123) basierend auf dem ermittelten ersten und zweiten kinematischen Fahrverhalten als der erste (103) oder als der zweite Schlitten (123) identifiziert wird.

5. Verfahren nach Anspruch 1 oder 2, umfassend die folgenden Schritte:
wenn sich einer der beiden Schlitten (103, 123) in einer Sättigungsposition relativ zu einer der Antriebsspulen befindet, in welcher das Magnetfeld des entsprechenden Magnetfelderzeugers einen Spulenkern der einen Antriebsspule in Sättigung bringt, Ausgeben (807) eines ersten Sollstromsteuersignals zum Bestromen der einen Antriebsspule mit einem ersten Soll-Wechselstrom als ersten Steuersignal an den zumindest zwei Antriebsspulen aufweisenden Stator,
wobei das erste Messsignal ein erstes Spannungsmesssignal umfasst, welches eine abgeleitete Spulenspannung der mit dem ersten Soll-Wechselstrom bestromten Antriebsspule nach dem Ausgeben des ersten Sollstromsteuersignals repräsentiert.

6. Verfahren nach Anspruch 4, wobei ein zweites Sollstromsteuersignal zum Bestromen der einen Antriebsspule mit einem ersten Soll-Gleichstrom als zweites Steuersignal an den zumindest zwei Antriebsspulen aufweisenden Stator ausgegeben wird, wobei als das zweite Messsignal ein zweites Spannungsmesssignal empfangen wird, welches eine abgeleitete Spulenspannung der mit dem ersten Soll-Gleichstrom bestromten Antriebsspule nach dem Ausgeben des zweiten Sollstromsteuersignals repräsentiert, wobei basierend auf dem zweiten Spannungsmesssignal ein induktiver Spannungsanteil der gemessenen Spulenspannung des ersten Spannungsmesssignals berechnet wird, wobei der ohmsche Spannungsanteil von der gemessenen Spulenspannung des ersten Spannungsmesssignals abgezogen wird, um eine vom ohmsche Spannungsanteil bereinigte Spulenspannung zu ermitteln, wobei der dem ersten Messsignal zugeordnete Schlitten 103,123) als der erste Schlitten (103) oder als der zweite Schlitten (123) basierend auf der ermittelten bereinigten Spulenspannung identifiziert wird.

7. Lineares Transportsystem (101), umfassend:
einen ersten Schlitten (103) und einen zweiten Schlitten (123),
eine Steuerung,
einen Linearmotor (107) zum Antreiben des ersten Schlittens (103) und des zweiten Schlittens (123), und
eine Führungsschiene (105),
wobei der Linearmotor (107) einen Stator mit zumindest zwei Antriebsspulen aufweisenden Motormodulen (109, 111, 113, 115, 117, 118) und einen ersten und einen zweiten Läufer umfasst,
wobei die miteinander mechanisch und elektrisch verbundenen Motormodule (109, 111, 113, 115, 117, 119) entlang der Führungsschiene (105) angeordnet sind,
wobei der erste Läufer am ersten Schlitten (103) und der zweite Läufer am zweiten Schlitten (123) angeordnet ist,
wobei der erste Schlitten (103) einen ersten Magnetfelderzeuger aufweist, welcher mehrere, entlang der Führungsschiene (105)
ausgerichtete Magneten aufweist und eingerichtet ist, ein erstes Magnetfeld zu erzeugen,
wobei der zweiten Schlitten (123) einen zweiten Magnetfelderzeuger aufweist, welcher mehrere, entlang der Führungsschiene (105)
ausgerichtete Magneten aufweist und eingerichtet ist, ein zweites Magnetfeld zu erzeugen,
wobei die Magneten des ersten Magnetfelderzeugers und die Magneten des zweiten Magnetfelderzeugers jeweils abwechselnd mit dem Südpol (S) und dem Nordpol (N) den Motormodulen (109, 111, 113, 115, 117, 119) zugewandt ausgerichtet sind,
wobei sich der erste Magnetfelderzeuger vom zweiten Magnetfelderzeuger in zumindest seinem magnetischen Vektorfeld unterscheidet, wobei die Polausrichtung der Magnete des ersten Magnetfelderzeugers des ersten Schlittens (103) gegenüber der Polausrichtung der Magnete des zweiten Magnetfelderzeugers des zweiten Schlittens (123) in Bezug auf die Längsausrichtung zu den Motormodulen (109, 111, 113, 115, 117, 119) hin um 180° gedreht und somit genau entgegengesetzt ist, so dass bei Betrachtung der ersten und zweiten Magnetfelderzeuger bei auf die Führungsschiene (105) aufgesetzten ersten und zweiten Schlitten (103, 123) der erste Magnet des ersten Magnetfelderzeugers mit dem Südpol (S) und der erste Magnet des zweiten Magnetfelderzeugers mit dem Nordpol (N) den Motormodulen (109, 111, 113, 115, 117, 119) zugewandt ausgerichtet sind,
wobei das lineare Transportsystem (101) eingerichtet ist, das Verfahren nach einem der Ansprüche 1 bis 6 auszuführen.

8. Lineares Transportsystem (101) nach Anspruch 7, wobei der erste und der zweite Magnetfelderzeuger jeweils Teil des Läufers des Schlittens (103, 123) sind.

## Claims

1. Method for identifying a carriage (103, 123) of a linear transport system (101), wherein the linear transport system (101) has a first carriage (103), a second carriage (123), a controller, a guide rail (105) and a linear motor (107) for driving the first and the second carriage (103, 123) along the guide rail (105), wherein the linear motor (107) comprises a stator with motor modules (109, 111, 113, 115, 117, 119) having at least two drive coils and comprises a first and a second rotor, wherein the motor modules (109, 111, 113, 115, 117, 119), which are mechanically and electrically connected to one another, are arranged along the guide rail (105), wherein the first rotor is arranged on the first carriage (103) and the second rotor is arranged on the second carriage (123), wherein the first carriage (103) has a first magnetic field generator that has a plurality of magnets oriented along the guide rail (105) and is designed to generate a first magnetic field, and the second carriage (123) has a second magnetic field generator that has a plurality of magnets oriented along the guide rail (105) and is designed to generate a second magnetic field, wherein the magnets of the first magnetic field generator and the magnets of the second magnetic field generator are oriented in each case alternately with the south pole (S) and the north pole (N) facing the motor modules (109, 111, 113, 115, 117, 119), wherein the first magnetic field generator differs from the second magnetic field generator at least in terms of its magnetic vector field, in which the pole orientation of the magnets of the first magnetic field generator of the first carriage (103) is rotated by 180° and thus exactly opposite the pole orientation of the magnets of the second magnetic field generator of the second carriage (123) with regard to the longitudinal orientation towards the motor modules (109, 111, 113, 115, 117, 119), such that, when the first and second magnetic field generators are considered in the case of first and second carriages (103, 123) placed on the guide rail (105), the south pole (S) of the first magnet of the first magnetic field generator and the north pole (N) of the first magnet of the second magnetic field generator are oriented facing the motor modules (109, 111, 113, 115, 117, 119), comprising the following steps:
applying (705, 803) a first control signal to the stator having at least two drive coils, this first control signal triggering a first measurement that depends on the magnetic vector field of the magnetic field generators of the two carriages (103, 123),
receiving (706, 805) at least one first measurement signal associated with one of the two carriages (103, 123), which first measurement signal is based on the first measurement,
identifying (719, 813) the carriage (103, 123) associated with the first measurement signal as the first carriage (103) or as the second carriage (123) based at least on the first measurement signal, wherein at least one reference value is stored in the controller and is associated with one of the two carriages (103, 123), wherein the identification (719, 813) of the carriage (103, 123) is based on a comparison between the first measurement signal and the at least one reference value,
outputting a first or a second identification signal (721, 723, 815, 817) that represents an identification of the carriage (103, 123) associated with the first measurement signal as the first (103) or the second carriage (123).

2. Method according to Claim 1, wherein a second control signal is applied (713, 807) to the stator having at least two drive coils, this trigging a second measurement that depends on the magnetic vector field of the magnetic field generators of the two carriages (103, 123), wherein a second measurement signal that is based on the second measurement is received (807, 714).

3. Method according to Claim 1 or 2, comprising the following steps:
receiving (703) a first position signal that represents a first position of one of the two carriages (103, 123), after receiving the first position signal, outputting (705) at least one first current vector control signal for distributing at least one first current vector via the drive coils based on a first commutation rule to the stator having at least two drive coils as first control signal, in order to drive the carriage (103, 123) located at the first position, and
receiving (706) a second position signal as the first measurement signal, wherein the second position signal represents at least one position of the carriage (103, 123) driven based on the output first current vector control signal after the first current vector control signal has been output (705), wherein a first kinematic behaviour of the carriage (103, 123) is ascertained based on the first position signal and on the second position signal after the first current vector control signal has been output, wherein the carriage (103, 123) is identified as the first (103) or as the second carriage (123) based on the ascertained kinematic travel behaviour.

4. Method according to Claim 3, wherein a first current vector control signal for distributing at least one second current vector via the drive coils based on the first commutation rule to the stator having at least two drive coils as second control signal in order to drive the carriage (103, 123) located at the second position comprises receiving (714) a third position signal as the second measurement signal, wherein the third position signal represents at least one position of the carriage (103, 123) driven based on the output second current vector control signal after the second current vector control signal has been output (713), wherein a second kinematic behaviour of the carriage (103, 123) is ascertained based on the second position signal and on the third position signal after the second current vector control signal has been output, wherein the carriage (103, 123) is identified as the first (103) or as the second carriage (123) based on the ascertained first and second kinematic travel behaviour.

5. Method according to Claim 1 or 2, comprising the following steps:
when one of the two carriages (103, 123) is in a saturation position in relation to one of the drive coils, in which the magnetic field of the corresponding magnetic field generator puts a coil core of one drive coil into saturation, outputting (807) a first setpoint current control signal for energizing the one drive coil with a first setpoint AC current to the stator having at least two drive coils as first control signal,
wherein the first measurement signal comprises a first voltage measurement signal that represents a derived coil voltage of the drive coil energized with the first setpoint AC current after the first setpoint current control signal has been output.

6. Method according to Claim 4, wherein a second setpoint current control signal for energizing the one drive coil with a first setpoint DC current is output to the stator having at least two drive coils as second control signal, wherein a second voltage measurement signal is received as the second measurement signal, this representing a derived coil voltage of the drive coil energized with the first setpoint DC current after the second setpoint current control signal has been output, wherein an inductive voltage component of the measured coil voltage of the first voltage measurement signal is calculated based on the second voltage measurement signal, wherein the resistive voltage component is subtracted from the measured coil voltage of the first voltage measurement signal in order to ascertain a coil voltage corrected for the resistive voltage component, wherein the carriage (103, 123) associated with the first measurement signal is identified as the first carriage (103) or as the second carriage (123) based on the ascertained corrected coil voltage.

7. Linear transport system (101), comprising:
a first carriage (103) and a second carriage (123),
a controller,
a linear motor (107) for driving the first carriage (103) and the second carriage (123), and a guide rail (105),
wherein the linear motor (107) comprises a stator with motor modules (109, 111, 113, 115, 117, 118) having at least two drive coils and comprises a first and a second rotor,
wherein the motor modules (109, 111, 113, 115, 117, 119), which are mechanically and electrically connected to one another, are arranged along the guide rail (105),
wherein the first rotor is arranged on the first carriage (103) and the second rotor is arranged on the second carriage (123),
wherein the first carriage (103) has a first magnetic field generator that has a plurality of magnets oriented along the guide rail (105) and is designed to generate a first magnetic field,
wherein the second carriage (123) has a second magnetic field generator that has a plurality of magnets oriented along the guide rail (105) and is designed to generate a second magnetic field,
wherein the magnets of the first magnetic field generator and the magnets of the second magnetic field generator are oriented in each case alternately with the south pole (S) and the north pole (N) facing the motor modules (109, 111, 113, 115, 117, 119),
wherein the first magnetic field generator differs from the second magnetic field generator at least in terms of its magnetic vector field, wherein the pole orientation of the magnets of the first magnetic field generator of the first carriage (103) is rotated by 180° and thus exactly opposite the pole orientation of the magnets of the second magnetic field generator of the second carriage (123) with regard to the longitudinal orientation towards the motor modules (109, 111, 113, 115, 117, 119), such that, when the first and second magnetic field generators are considered in the case of first and second carriages (103, 123) placed on the guide rail (105), the south pole (S) of the first magnet of the first magnetic field generator and the north pole (N) of the first magnet of the second magnetic field generator are oriented facing the motor modules (109, 111, 113, 115, 117, 119),
wherein the linear transport system (101) is designed to carry out the method according to one of Claims 1 to 6.

8. Linear transport system (101) according to Claim 7, wherein the first and the second magnetic field generator are each part of the rotor of the carriage (103, 123).

## Revendications

1. Procédé permettant d'identifier un chariot (103, 123) d'un système de transport linéaire (101), le système de transport linéaire (101) comprenant un premier chariot (103), un deuxième chariot (123), une unité de commande, un rail de guidage (105) et un moteur linéaire (107) pour entraîner le premier et le deuxième chariot (103, 123) le long du rail de guidage (105), le moteur linéaire (107) comprenant un stator doté de modules de moteur (109, 111, 113, 115, 117, 119) présentant au moins deux bobines d'entraînement et un premier et un deuxième rotor, les modules de moteur (109, 111, 113, 115, 117, 119) reliés mécaniquement et électriquement les uns aux autres étant disposés le long du rail de guidage (105), le premier rotor étant disposé sur le premier chariot (103) et le deuxième rotor étant disposé sur le deuxième chariot (123), le premier chariot (103) présentant un premier générateur de champ magnétique qui présente plusieurs aimants alignés le long du rail de guidage (105) et étant aménagé pour générer un premier champ magnétique, et le deuxième chariot (123) présentant un deuxième générateur de champ magnétique qui présente plusieurs aimants alignés le long du rail de guidage (105) et étant aménagé pour générer un deuxième champ magnétique, les aimants du premier générateur de champ magnétique et les aimants du deuxième générateur de champ magnétique étant alignés en étant tournés vers les modules de moteur (109, 111, 113, 115, 117, 119) respectivement en alternance avec le pôle sud (S) et le pôle nord (N), le premier générateur de champ magnétique étant différent du deuxième générateur de champ magnétique au moins par son champ magnétique vectoriel dans lequel l'alignement polaire des aimants du premier générateur de champ magnétique du premier chariot (103) est tourné de 180°, et donc exactement opposé, par rapport à l'alignement polaire des aimants du deuxième générateur de champ magnétique du deuxième chariot (123) relativement à l'alignement longitudinal par rapport aux modules de moteur (109, 111, 113, 115, 117, 119) de sorte que lorsque l'on observe les premier et deuxième générateurs de champ magnétique avec les premier et deuxième chariots (103, 123) posés sur le rail de guidage (105), le premier aimant du premier générateur de champ magnétique est aligné en étant tourné vers les modules de moteur (109, 111, 113, 115, 117, 119) avec le pôle sud (S) et le premier aimant du deuxième générateur de champ magnétique est aligné en étant tourné vers les modules de moteur avec le pôle nord (N),
comprenant les étapes suivantes consistant à :
appliquer (705, 803) un premier signal de commande au stator présentant au moins deux bobines d'entraînement, qui déclenche une première mesure qui dépend du champ magnétique vectoriel des générateurs de champ magnétique des deux chariots (103, 123),
recevoir (706, 805) au moins un premier signal de mesure associé à l'un des deux chariots (103, 123) et qui est basé sur la première mesure,
identifier (719, 813) le chariot (103, 123) associé au premier signal de mesure comme le premier chariot (103) ou comme le deuxième chariot (123) sur la base au moins du premier signal de mesure, au moins une valeur de référence étant enregistrée dans l'unité de commande qui est associée à l'un des deux chariots (103, 123), l'identification (719, 813) du chariot (103, 123) étant basée sur une comparaison du premier signal de mesure avec ladite au moins une valeur de référence,
sortir un premier ou un deuxième signal d'identification (721, 723, 815, 817) qui représente une identification du chariot (103, 123) associé au premier signal de mesure comme le premier (103) ou le deuxième (123) chariot.

2. Procédé selon la revendication 1, dans lequel un deuxième signal de commande est appliqué au stator (713, 807) présentant au moins deux bobines, qui déclenche une deuxième mesure qui dépend du champ magnétique vectoriel des générateurs de champ magnétique des deux chariots (103, 123), un deuxième signal de mesure étant reçu (807, 714) qui est basé sur la deuxième mesure.

3. Procédé selon la revendication 1 ou 2, comprenant les étapes suivantes consistant à :
recevoir (703) un premier signal de position qui représente une première position d'un des deux chariots (103, 123),
après la réception du premier signal de position, sortir (705) au moins un premier signal de commande d'indicateur de courant pour répartir au moins un premier indicateur de courant sur la base d'une première règle de commutation sur les bobines d'entraînement comme premier signal de commande à destination du stator présentant au moins deux bobines d'entraînement pour entraîner le chariot (103, 123) se trouvant à la première position, et
recevoir (706) comme premier signal de mesure un deuxième signal de position, le deuxième signal de position représentant au moins une position du chariot (103, 123) entraîné sur la base du premier signal de commande d'indicateur de courant sorti, après la sortie (705) du premier signal de commande d'indicateur de courant, un premier comportement cinématique du chariot (103, 123) après la sortie du premier signal de commande d'indicateur de courant étant déterminé sur la base du premier signal de position et du deuxième signal de position, le chariot (103, 123) étant identifié sur la base du comportement de déplacement cinématique comme le premier (103) ou comme le deuxième chariot (123).

4. Procédé selon la revendication 3, dans lequel un premier signal de commande d'indicateur de courant pour répartir au moins un deuxième indicateur de courant sur la base de la première règle de commutation sur les bobines d'entraînement comme deuxième signal de commande destiné au stator présentant au moins deux bobines d'entraînement pour entraîner le chariot (103, 123) se trouvant à la deuxième position, reçu (714) comme deuxième signal de mesure, comprend un troisième signal de position, le troisième signal de position représentant au moins une position du chariot (103, 123) entraîné sur la base du deuxième signal de commande d'indicateur de courant sorti, après la sortie (713) du deuxième signal de commande d'indicateur de courant, dans lequel, sur la base du deuxième signal de position et du troisième signal de position, un deuxième comportement cinématique du chariot (103, 123) après la sortie du deuxième signal de commande d'indicateur de courant est déterminé, le chariot (103, 123) étant identifié sur la base du premier et du deuxième comportement de déplacement cinématique comme premier (103) ou comme deuxième chariot (123).

5. Procédé selon la revendication 1 ou 2, comprenant les étapes suivantes consistant à :
lorsque l'un des deux chariots (103, 123) se trouve dans une position de saturation relativement à l'une des bobines d'entraînement, dans laquelle le champ magnétique du générateur de champ magnétique correspondant amène un noyau de bobine de ladite une bobine d'entraînement à saturation, sortir (807) un premier signal de commande de courant de consigne pour exciter ladite une bobine d'entraînement par un premier courant alternatif de consigne comme premier signal de commande à destination du stator présentant au moins deux bobines d'entraînement,
le premier signal de mesure comprenant un premier signal de mesure de tension qui représente une tension de bobine dérivée de la bobine d'entraînement excitée par le premier courant alternatif de consigne après la sortie du premier signal de commande de courant de consigne.

6. Procédé selon la revendication 4, dans lequel un deuxième signal de commande de courant de consigne pour exciter ladite une bobine d'entraînement par un premier courant continu de consigne est sorti comme deuxième signal de commande à destination du stator présentant au moins deux bobines d'entraînement, dans lequel, comme deuxième signal de mesure, un deuxième signal de mesure de tension est reçu qui représente une tension de bobine dérivée de la bobine d'entraînement excitée par le premier courant continu de consigne après la sortie du deuxième signal de commande de courant de consigne, dans lequel, sur la base du deuxième signal de mesure de tension, une composante de tension inductive de la tension de bobine mesurée du premier signal de mesure de tension est calculée, la composante de tension ohmique étant déduite de la tension de bobine mesurée du premier signal de mesure de tension afin de déterminer une tension de bobine corrigée de la composante de tension ohmique, le chariot (103, 123) associé au premier signal de mesure étant identifié comme premier chariot (103) ou comme deuxième chariot (123) sur la base de la tension de bobine corrigée déterminée.

7. Système de transport linéaire (101), comprenant :
un premier chariot (103) et un deuxième chariot (123), une unité de commande,
un moteur linéaire (107) pour entraîner le premier chariot (103) et le deuxième chariot (123), et
un rail de guidage (105),
le moteur linéaire (107) comprenant un stator doté de modules de moteur (109, 111, 113, 115, 117, 118) présentant au moins deux bobines d'entraînement et un premier et un deuxième rotor,
les modules de moteur (109, 111, 113, 115, 117, 119) reliés mécaniquement et électriquement les uns aux autres étant disposés le long du rail de guidage (105), le premier rotor étant disposé sur le premier chariot (103) et le deuxième rotor étant disposé sur le deuxième chariot (123),
le premier chariot (103) présentant un premier générateur de champ magnétique qui présente plusieurs aimants alignés le long du rail de guidage (105) et qui est aménagé pour générer un premier champ magnétique,
le deuxième chariot (123) présentant un deuxième générateur de champ magnétique qui présente plusieurs aimants alignés le long du rail de guidage (105) et qui est aménagé pour générer un deuxième champ magnétique,
les aimants du premier générateur de champ magnétique et les aimants du deuxième générateur de champ magnétique étant alignés en étant tournés vers les modules de moteur (109, 111, 113, 115, 117, 119) respectivement en alternance avec le pôle sud (S) et le pôle nord (N),
le premier générateur de champ magnétique étant différent du deuxième générateur de champ magnétique au moins par son champ magnétique vectoriel, l'alignement polaire des aimants du premier générateur de champ magnétique du premier chariot (103) étant tourné de 180°, et donc exactement opposé, par rapport à l'alignement polaire des aimants du deuxième générateur de champ magnétique du deuxième chariot (123) relativement à l'alignement longitudinal par rapport aux modules de moteur (109, 111, 113, 115, 117, 119) de sorte que lorsque l'on observe les premier et deuxième générateurs de champ magnétique avec les premier et deuxième chariots (103, 123) posés sur le rail de guidage (105), le premier aimant du premier générateur de champ magnétique est aligné en étant tourné vers les modules de moteur (109, 111, 113, 115, 117, 119) avec le pôle sud (S) et le premier aimant du deuxième générateur de champ magnétique est aligné en étant tourné vers les modules de moteur avec le pôle nord (N),
le système de transport linéaire (101) étant aménagé pour exécuter le procédé selon l'une quelconque des revendications 1 à 6.

8. Système de transport linéaire (101) selon la revendication 7, dans lequel le premier et le deuxième générateur de champ magnétique font respectivement partie du rotor du chariot (103, 123).
